# EUROPÄISCHE PATENTANMELDUNG

(11) **EP 4 374 977 A1**
(43) Veröffentlichungstag der Anmeldung: **29.05.2024**
(21) Anmeldenummer: 23185722.8
(22) Anmeldetag: 17.07.2023
(51) Int. Cl.: B08B 5/04, B08B 7/02, B08B 5/02, B33Y 40/20

(54) **VERFAHREN UND REINIGUNGSVORRICHTUNG ZUR REINIGUNG VON DREIDIMENSIONALEN OBJEKTEN**

(30) Priorität: 09.11.2022 DE 102022004176
(71) Anmelder: Solukon Ingenieure GbR, 86165 Augsburg (DE)
(72) Erfinder: HARTMANN, Andreas, 86391 Stadtbergen (DE)
(74) Vertreter: Wiedemann, Markus

(57) **Zusammenfassung**

Die Erfindung betrifft ein Verfahren und eine Vorrichtung zum Reinigen wenigstens eines dreidimensionalen Objekts (3), welches insbesondere wenigstens eine Öffnung, eine Ausnehmung und/oder einen das Objekt (3) durchdringenden Kanal aufweist, in einer Reinigungsvorrichtung (1), wobei das Objekt (3) durch schichtweises Aufbringen und selektives Verfestigen eines pulverförmigen Aufbaumaterials im Laufe eines Bauprozesses hergestellt worden ist, von umgebendem, unverfestigt gebliebenem pulverförmigen Aufbaumaterial (20), wobei das Verfahren wenigstens die folgenden Schritte umfasst: das Objekt (3) wird in einer Halte- oder Spanneinrichtung (28) der Reinigungsvorrichtung (1) gehalten oder gespannt, und das Objekt (3) wird durch Werkzeugmittel von dem umgebendem, unverfestigt gebliebenem pulverförmigen Aufbaumaterial (20) gereinigt, von denen wenigstens ein Teil von einem mobilen Arm (10) einer händisch oder von einer Steuerung (32) gesteuerten Handhabungseinrichtung (12) der Reinigungsvorrichtung (1) geführt wird, wobei der wenigstens ein Teil der Werkzeugmittel von dem mobilen Arm (10) in Bezug zu dem Objekt (3) in unterschiedliche Positionen geführt werden kann, um an den Positionen jeweils wenigstens einen Reinigungsmodus auszuführen.

## Beschreibung

Die Erfindung betrifft ein Verfahren und eine Vorrichtung zum Reinigen wenigstens eines dreidimensionalen Objekts, welches insbesondere wenigstens eine Öffnung, eine Ausnehmung und/oder einen das Objekt durchdringenden Kanal aufweist, in einer Reinigungsvorrichtung, wobei das Objekt durch schichtweises Aufbringen und selektives Verfestigen eines pulverförmigen Aufbaumaterials im Laufe eines Bauprozesses hergestellt worden ist, von umgebendem, unverfestigt gebliebenem pulverförmigen Aufbaumaterial, gemäß den Oberbegriffen der Ansprüche 1 und 12.

Ein gattungsgemäßes Verfahren und eine gattungsgemäße Vorrichtung sind aus DE 10 2018 009 041 A1 bekannt, wobei das Objekt in einer um wenigstens eine Drehachse angetriebenen Spanneinrichtung der Reinigungsvorrichtung gespannt und um die wenigstens eine Drehachse gedreht wird, und bei welchem das Objekt zusätzlich durch mittels wenigstens eines mobilen Arms einer Handhabungseinrichtung der Reinigungsvorrichtung geführte Werkzeugmittel von dem umgebendem, unverfestigt gebliebenem pulverförmigen Aufbaumaterial gereinigt wird, wobei die Drehung der Spanneinrichtung um die wenigstens eine Drehachse und die Bewegung des mobilen Arms der Handhabungseinrichtung zur Reinigung des Objekts mittels einer Steuereinrichtung parallel und koordiniert gesteuert werden. Die von dem Arm geführten Werkzeugmittel können eine Reinigung und Oberflächenveredelung des Objekts durchführen, wie beispielsweise Freiblasen/Glasperlstrahlen/ Trockeneisstrahlen. Weiterhin können die Werkzeugmittel auch Mittel zum Entfernen des umgebenden Aufbaumaterials durch unspezifisches Anströmen des Objekts mit einem Fluid umfassen.

Im 3D-Druck entstandene Objekte können jedoch Vertiefungen, Ausnehmungen, Öffnungen und die Objekte durchdringende Kanäle aufweisen, welche mit unverfestigt gebliebenem pulverförmigen Aufbaumaterial gefüllt sind, das dann an den Innenwänden der Kanäle, Ausnehmungen oder Öffnungen anhaftet. Dann ist ein unspezifisches Anströmen des Objekts mit einem Fluid oft wirkungslos, da diese Anströmung lediglich oberflächlich wirkt.

### Aufgabe der Erfindung

Die Aufgabe der Erfindung besteht darin, ein Verfahren und eine Reinigungsvorrichtung der eingangserwähnten Art derart weiter zu entwickeln, dass eine effektivere Reinigung des Objekts zur Verfügung gestellt wird.

Diese Aufgabe wird durch die Merkmale der unabhängigen Patentansprüche 1 und 12 gelöst.

### Offenbarung der Erfindung

Das Herstellen des dreidimensionalen Objekts, wie beispielsweise eines Bauteils oder Modells erfolgt daher in einem Schichtbauverfahren mit Hilfe von Computerdaten, indem wiederholt dünne Schichten aus losem pulverförmigen Aufbaumaterial auf eine Bauplattform aufgetragen werden und jede einzelne Schicht selektiv zu einem Bauteil- oder Modellquerschnitt verfestigt wird. Die Verfestigung erfolgt beispielsweise chemisch, indem mit Drucktechnologie Tröpfchen aus Kleber selektiv auf festgelegte Bereiche der Schichten aus losem pulverförmigen Aufbaumaterial aufgebracht werden. Alternativ besteht die Möglichkeit, loses pulverförmiges Aufbaumaterial selektiv mit energiereicher Strahlung zu verschmelzen oder zu versintern.

Die Reinigung des Objekts von losem, nicht verfestigtem pulverförmigem Aufbaumaterial in der Reinigungsvorrichtung kann das komplette Auspacken des Objekts und der Bauplattform aus dem Pulverkuchen losen Pulvers beinhalten und/oder ein Abreinigen von Resten von losem Pulver von dem Objekt und der Bauplattform, welches nach dem Auspacken noch an dem Objekt und an der Bauplattform anhaftet. Insbesondere kann ein Entfernen losen Pulvers aus wenigstens einer Öffnung, wenigstens einer Ausnehmung des Objekts und/oder aus wenigstens einem das Objekt durchdringenden Kanal des Objekts von der Reinigung des Objekts umfasst.

Erfindungsgemäß wird ein Verfahren zum Reinigen wenigstens eines dreidimensionalen Objekts, welches insbesondere wenigstens eine Öffnung, eine Ausnehmung und/oder einen das Objekt durchdringenden Kanal aufweist, in einer Reinigungsvorrichtung von umgebendem, unverfestigt gebliebenem pulverförmigen Aufbaumaterial vorgeschlagen, wobei das Objekt durch schichtweises Aufbringen und selektives Verfestigen eines pulverförmigen Aufbaumaterials im Laufe eines Bauprozesses hergestellt worden ist.

Die Öffnung des Objekts kann insbesondere eine Öffnung oder Bohrung sein, die wie eine Sacklochöffnung oder Sacklochbohrung ausgestaltet ist und dann das Objekt nicht durchdringt. Ein das Objekt durchdringender Kanal hingegen geht durch wenigstens einen Teil des Objekts hindurch und weist, abhängig davon ob es sich um einen in dem Objekt verzweigten Kanal handelt oder nicht, wenigstens zwei Kanaleingänge oder Kanalöffnungen an einer Oberfläche des Objekts auf. Eine Ausnehmung kann eine an einer Oberfläche des Objekts ausgebildete Vertiefung jeglicher Art sein. Wie eingangs ausgeführt, stellt es ein Problem dar, loses Pulver aus diesen Ausnehmungen, Öffnungen oder Kanälen zu entfernen.

Das Verfahren umfasst wenigstens die folgenden Schritte:
a) das Objekt wird in einer Halte- oder Spanneinrichtung der Reinigungsvorrichtung gespannt, und
b) das Objekt wird durch Werkzeugmittel von dem umgebendem, unverfestigt gebliebenem pulverförmigen Aufbaumaterial gereinigt, von denen wenigstens ein Teil von einem mobilen Arm einer insbesondere händisch oder von einer Steuerung gesteuerten Handhabungseinrichtung der Reinigungsvorrichtung geführt wird, wobei
c) der wenigstens eine Teil der Werkzeugmittel von dem mobilen Arm in Bezug zu dem Objekt in unterschiedliche Positionen geführt werden kann, um an den Positionen jeweils wenigstens einen Reinigungsmodus auszuführen.

Erfindungsgemäß sind mehrere Reinigungsmodi vorgesehen, nämlich ein Schwingungsmodus, ein Einführungsmodus und ein Saugmodus, wobei jedem Reinigungsmodus bestimmte Werkzeugmittel zugeordnet sind, die wenigstens teilweise von dem mobilen Arm der Handhabungseinrichtung geführt sind. Es kann dann vorgesehen sein, dass wenigstens zwei Reinigungsmodi unter dem Schwingungsmodus, dem Einführungsmodus und dem Saugmodus parallel oder hintereinander (sukzessive) ausgeführt werden, insbesondere durch die Steuerung oder auch händisch von einer Bedienperson gesteuert.

Erfindungsgemäß wird für den Schwingungsmodus als Werkzeugmittel ein Schwingungsanreger herangezogen, welcher eingerichtet und ausgebildet ist, um im Schwingungsmodus das Objekt durch Luftschall und/oder durch Körperschall zu Schwingungen anzuregen. Da wenigstens ein Teil des Schwingungsanregers an dem mobilen Arm der Handhabungseinrichtung aufgenommen ist, kann der wenigstens eine Teil des Schwingungsanregers flexibel, insbesondere sukzessive an unterschiedliche Stellen des Objekts herangeführt werden und/oder insbesondere sukzessive unterschiedliche Stellen des Objekts insbesondere direkt kontaktieren, um das Objekt zu Schwingungen anzuregen. Wenn das Objekt in Schwingungen versetzt ist, können diese helfen, dass loses Pulver von dem Objekt, aus der wenigstens einen Öffnung, aus der wenigstens einen Ausnehmung und/oder aus dem wenigstens einen, das Objekt durchdringenden Kanal abfließt. Das flexible und insbesondere sukzessive Heranführen des Schwingungsanregers an unterschiedliche Stellen des Objekts bzw. insbesondere das sukzessive Kontaktieren unterschiedlicher Stellen des Objekts durch den Schwingungsanreger ist besonders bei großbauenden Objekten vorteilhaft, bei welchen eine lediglich an einer Stelle vorgenommene Schwingungsanregung dämpfungsbedingt zu allenfalls geringen und dadurch in Bezug auf die Reinigung ineffizienten Schwingungen an von dieser einen Stelle entfernten Stellen des Objekts führt. Insofern ist die Erfindung auch gegenüber Lösungen vorteilhaft, bei welchen lediglich die Halte- oder Spanneinrichtung des Objekts schwingungserregt wird und die Einspannstelle oder -fläche des Objekts nach dem Kriterium der Spannbarkeit ausgewählt wird.

Das Positionieren wenigstens eines Teils des Schwingungsanregers (Aktuator) im Schwingungsmodus erfolgt bevorzugt durch ein Ausrichten des den wenigstens einen Teil der Schwingungseinrichtung tragenden oder aufnehmenden mobilen Arms der Handhabungseinrichtung derart, dass der wenigstens eine Teils des Schwingungsanregers (Aktuator) gezielt an einer bestimmten Position des Objekts positioniert wird. Dabei kann in dieser bestimmten Position der wenigstens eine Teil des Schwingungsanregers in einen direkten Kontakt mit dem Objekt treten. Die Handhabungseinrichtung und/oder ihr mobiler Arm kann hierzu von der elektronischen Steuerung oder von einer elektronischen Steuerung oder händisch gesteuert werden.

Der Schwingungsmodus kann dann insbesondere durch eine elektronische Steuerung im Hinblick auf die Anregungsfrequenz und/oder Anregungsamplitude der vom Schwingungserreger erzeugten Schwingungen gesteuert werden, insbesondere automatisch durch die elektronische Steuerung oder durch eine elektronische Steuerung oder abhängig von über eine Mensch-/Maschine-Schnittstelle eingegebenen Vorgaben oder Parametern einer Bedienperson.

Alternativ oder zusätzlich wird für den Einführungsmodus als Werkzeugmittel eine Fluid-Einführungseinrichtung herangezogen, welche eingerichtet und ausgebildet ist, im Einführungsmodus wenigstens ein Fluid gezielt in die wenigstens eine Öffnung und/oder in die wenigstens eine Ausnehmung und/oder in wenigstens eine Kanalöffnung des wenigstens einen durchdringenden Kanals des Objekts einzuführen oder einzuströmen. Gezieltes Einströmen oder Einführen bedeutet, dass wenigstens ein Anteil des Fluidstrom des Fluids mit einer gewissen Genauigkeit in die wenigstens eine Öffnung und/oder in die wenigstens eine Ausnehmung und/oder in die wenigstens eine Kanalöffnung des wenigstens einen das Objekt durchdringenden Kanals des Objekts eingeführt oder eingeströmt wird. Das bevorzugt unter Druck stehende Fluid sorgt dann dafür, dass loses Pulver von dem Objekt, aus der wenigstens einen Öffnung, aus der wenigstens einen Ausnehmung und/oder aus dem wenigstens einen, das Objekt durchdringenden Kanal abfließen kann.

Der Einführungsmodus kann dann insbesondere durch eine elektronische Steuerung im Hinblick auf den Druck, die Menge und/oder das Volumen des von der Fluid-Einführungseinrichtung ausgeströmtem Fluids gesteuert werden, insbesondere automatisch oder abhängig von über eine Mensch-/Maschine-Schnittstelle eingegebenen Vorgaben einer Bedienperson.

Das Ausrichten des Fluidstroms des Fluids im Einführungsmodus erfolgt bevorzugt durch ein Ausrichten des wenigstens einen Teil der Fluid-Einführungseinrichtung tragenden mobilen Arms der Handhabungseinrichtung bevorzugt derart, dass der Fluidstrom gezielt in die wenigstens eine Öffnung, in die wenigstens eine Ausnehmung und/oder in die wenigstens eine Kanalöffnung des wenigstens einen, das Objekt durchdringenden Kanals eingeführt oder eingeströmt wird. Die Handhabungseinrichtung und/oder ihr mobiler Arm kann hierzu von der elektronischen Steuerung oder von einer elektronischen Steuerung oder händisch gesteuert werden.

Alternativ oder zusätzlich wird für den Saugmodus als Werkzeugmittel eine Saugeinrichtung herangezogen, welche eingerichtet und ausgebildet ist, um im Saugmodus einen Saugstrom insbesondere aus einem strömungsfähigen Medium wie einem Gas, insbesondere Luft zu erzeugen, durch welchen unverfestigt gebliebenes pulverförmiges Aufbaumaterial von dem Objekt abgesaugt und in dem Saugstrom mitgerissen wird, insbesondere gezielt aus der wenigstens einen Öffnung und/oder aus der wenigstens einen Ausnehmung und/oder aus dem wenigstens einen das Objekt durchdringenden Kanal. Gezieltes Absaugen kann dabei bedeuten, dass beispielsweise eine Saugöffnung eines den Saugstrom führenden Saugschlauchs oder Saugrohrs als Teil der Saugeinrichtung mittels des mobilen Arms an dem Objekt, direkt an der wenigstens einen Öffnung, direkt an der wenigstens einen Ausnehmung und/oder direkt an der wenigstens einen Kanalöffnung des wenigstens einen, das Objekt durchdringenden Kanals positioniert wird. Eine solche Positionierung kann ein gezieltes Ansetzen oder Aufsetzen einer Düse oder Öffnung des Saugschlauchs oder des Saugrohrs an der wenigstens einen Öffnung, an der wenigstens einen Ausnehmung und/oder an der wenigstens einen Kanalöffnung des wenigstens einen, das Objekt durchdringenden Kanals oder ein gezieltes Einführen in die wenigstens eine Öffnung, in die wenigstens eine Ausnehmung und/oder in die wenigstens eine Kanalöffnung des wenigstens einen, das Objekt durchdringenden Kanals umfassen.

Wie beim Einführungsmodus kann auch im Saugmodus das Ausrichten des Saugstroms durch ein Ausrichten des wenigstens einen Teil der Saugeinrichtung tragenden mobilen Arms der Handhabungseinrichtung bevorzugt derart erfolgen, dass, dass der Saugstrom gezielt in die wenigstens eine Öffnung, in die wenigstens eine Ausnehmung und/oder in die wenigstens eine Kanalöffnung des wenigstens einen, das Objekt durchdringenden Kanals gerichtet ist. Die Handhabungseinrichtung und/oder ihr mobiler Arm kann hierzu von der elektronischen Steuerung oder von einer Steuerung oder auch händisch gesteuert werden.

Vorteilhaft kann sein, dass bei dem Verfahren als erster Reinigungsmodus beispielsweise der Schwingungsmodus ausgeführt wird, um wenigstens einen Teil des losen Pulvers von den Innenwänden der wenigstens einen Öffnung, Ausnehmung und/oder von dem wenigstens einen das Objekt durchdringenden Kanal abzulösen. Im Anschluss daran kann beispielsweise der Saugmodus und/oder der Einführungsmodus durchgeführt werden, um das abgelöste Pulver aus der wenigstens einen Öffnung, Ausnehmung und/oder aus dem wenigstens einen das Objekt durchdringenden Kanal insbesondere durch Saugen (Saugstrom) und/oder Blasen (Druckbeaufschlagung durch den Fluidstrom) zu entfernen. Eine Reihenfolge der Reinigungsmodi kann der Fachmann nach Bedarf festlegen.

Auch kann bei dem Verfahren wenigstens ein auswechselbarer Teil der Werkzeugmittel bedarfsweise aus einem Magazin entnommen, an dem mobilen Arm aufgenommen oder in das Magazin abgelegt werden, insbesondere von dem mobilen Arm der Handhabungseinrichtung selbst, welche hierzu händisch oder von der elektronischen Steuerung oder von einer elektronischen gesteuert wird.

Der auswechselbare Teil der Werkzeugmittel kann dann der (den) wenigstens eine Teil der Werkzeugmittel sein oder umfassen, welcher an oder von dem mobilen Arm abhängig von dem jeweils aktiven Modus (Schwingungsmodus, Einführungsmodus, Saugmodus) aufgenommen oder getragen wird. Für einen Wechsel des Modus kann dann der auswechselbare Teil der Werkzeugmittel des vorangehenden Modus in das Magazin abgelegt und dafür der auswechselbare Teil der Werkzeugmittel dem Magazin entnommen werden, welcher für den nachfolgenden Modus verwendet werden soll. Dieser Wechsel der Werkzeugmittel kann bevorzugt automatisch gesteuert oder geregelt werden, um dann von dem mobilen Arm der Handhabungseinrichtung ausgeführt zu werden. Alternativ kann der Wechsel der Werkzeugmittel aber auch händisch ausgeführt werden, indem der auswechselbare Teil der Werkzeugmittel durch eine Bedienperson an dem mobilen Arm der Handhabungseinrichtung lösbar befestigt wird.

Demgegenüber kann ein Versorgungsteil der Werkzeugmittel bevorzugt an oder in dem mobilen Arm ausgebildet sein, wie beispielsweise eine Fluidversorgung, eine elektrische Energieversorgung und/oder eine Druckluftversorgung und/oder eine Partikelversorgung und/oder eine Signalverbindung mit der oder einer elektronischen Steuerung für den auswechselbaren Teil der Werkzeugmittel. Der Versorgungsteil der Werkzeugmittel kann insbesondere Leitungen umfassen, welche ein Fluid oder ein Gas oder Partikel leiten, elektrische Kabel zur elektrischen Energieversorgung und/oder Signalkabel zur Steuerung/Regelung der der Werkzeugmittel. Eine mechanische und/oder elektrische und/oder pneumatische und/oder hydraulische Verbindung des auswechselbaren Teils der Werkzeugmittel mit dem Versorgungsteil der Werkzeugmittel kommt dann bevorzugt bei der Aufnahme des auswechselbaren Teils durch den mobilen Arm automatisch zustande, wobei hierfür Schnittstellen vorgesehen sind, die dafür ausgebildet und eingerichtet sind. Insbesondere kann ein für wenigstens zwei Reinigungsmodi gemeinsamer Versorgungsteil an oder in dem mobilen Arm ausgebildet sein.

Alternativ kann der Versorgungsteil aber auch (zunächst) getrennt von dem mobilen Arm ausgeführt sein und insbesondere flexible Schläuche und/oder Kabel umfassen, die bereits mit dem auswechselbaren Teil verbunden sind. Der Versorgungsteil kann daher bereits mit dem auswechselbaren Teil verbunden sein, wenn sich das auswechselbare Teil noch in dem Magazin befindet, wobei dann der Versorgungsteil von dem mobilen Arm mitbewegt wird, wenn der auswechselbare Teil von diesem aufgenommen wird bzw. wenn der auswechselbare Teil der Werkzeugmittel an dem Objekt positioniert wird.

Beispielsweise beim Schwingungsmodus kann der auswechselbare Teil der Werkzeugmittel einen Aktuator (Schwinger) des Schwingungsanregers umfassen, während der Versorgungsteil, der hier beispielsweise eine Verkabelung für die elektrische Energieversorgung und Steuerung des Aktuators umfasst, bereits an oder in dem mobilen Arm ausgebildet ist. Eine Koppelung zwischen dem Aktuator und elektrischen Kontakten der mit dem mobilen Arm geführten Verkabelung kann dann beispielsweise bei der Aufnahme des Aktuators durch den mobilen Arm automatisch entstehen oder auch händisch von der Bedienperson herbeigeführt werden.

Der wenigstens eine Schwingungsanreger kann mindestens Folgendes umfassen: einen Ultraschall-Schwingungsanreger, einen Rüttler und/oder einen Klopfer. Es hat sich herausgestellt, dass eine an verschiedenen Stellen des Objekts durchgeführte Anregung durch Ultraschallschwingungen eine besonders gutes Reinigungsergebnis erzielt.

Gemäß einer Weiterbildung kann der wenigstens eine Schwingungsanreger von dem mobilen Arm im Schwingungsmodus derart geführt werden, dass der wenigstens eine Schwingungsanreger das Objekt insbesondere direkt kontaktiert oder von dem Objekt beabstandet ist. Bei einem bevorzugt herbeigeführten direkten Kontakt des Schwingungserregers mit dem Objekt wird der Körperschall von dem Schwingungsanreger direkt in das Objekt eingeleitet, insbesondere sukzessive an verschiedenen Stellen des Objekts durch eine entsprechende Positionierung des Schwingungserregers mittels des mobilen Arms. Bei Abstand des Schwingungserregers von dem Objekt wird der Körperschall des Schwingungserregers in Luftschall der Umgebungsluft gewandelt, der dann wiederum das Objekt zu Körperschallschwingungen anregt. Diese Art der Schwingungsanregung kann ebenfalls an verschiedenen Stellen des Objekts durch eine entsprechende Positionierung des Schwingungserregers mittels des mobilen Arms herbeigeführt werden.

Die Fluid-Einführungseinrichtung kann wenigstens eine Düse oder eine Fluid-Strömungsöffnung aufweisen, welche ausgebildet und eingerichtet ist, um im Einführungsmodus an der wenigstens einen Öffnung und/oder in die wenigstens eine Ausnehmung und/oder an der wenigstens einen Kanalöffnung des wenigstens einen das Objekt durchdringenden Kanals anzusetzen oder in die wenigstens eine Öffnung und/oder in die wenigstens eine Ausnehmung und/oder in die wenigstens eine Kanalöffnung des wenigstens einen das Objekt durchdringenden Kanals wenigstens teilweise einzutauchen, um das Fluid dort einzuführen oder einzuströmen, vorzugsweise unter Druck.

Auch kann im Einführungsmodus eine konstante oder pulsierende Einführung von Fluid in die wenigstens eine Öffnung und/oder in die wenigstens Ausnehmung und/oder in die wenigstens eine Kanalöffnung des wenigstens einen das Objekt durchdringenden Kanals stattfinden. Als Fluid kann wenigstens Folgendes verwendet werden: wenigstens ein Gas und/oder Druckluft und/oder feste Partikel und/oder ein inertes Schutzgas.

Bei dem Verfahren kann auch wenigstens ein erster Sensor verwendet werden, mit welchem im Saugmodus erkannt werden kann, ob unverfestigt gebliebenes pulverförmiges Aufbaumaterial von dem Objekt und/oder aus der wenigstens einen Öffnung und/oder aus dem wenigstens einen Ausnehmung und/oder aus dem wenigstens einen das Objekt durchdringenden Kanal entfernt wird oder entfernt worden ist, und/oder welche Menge, Masse und/oder Volumen an unverfestigt gebliebenem pulverförmigen Aufbaumaterial von dem Objekt und/oder aus der wenigstens einen Öffnung und/oder aus der wenigstens einen Ausnehmung und/oder aus dem wenigstens einen das Objekt durchdringenden Kanal entfernt wird oder entfernt worden ist. Der erste Sensor ist dann bevorzugt ausgebildet, um eine Menge, Masse oder einen Volumenstrom an unverfestigt gebliebenem pulverförmigen Aufbaumaterial (abgelöstem Pulver) zu messen und als Sensorsignal in die elektronische Steuerung oder in eine elektronische Steuerung zur Auswertung einzusteuern.

Der Saugmodus kann dann abhängig von dem Sensorsignal, das dann das Reinigungsergebnis repräsentiert, gesteuert und insbesondere abgebrochen oder (an einer anderen Stelle des Objekts) fortgesetzt werden. Dabei kann auch ein Referenzwert für die Menge, die Masse und/oder den Volumenstrom an abgelöstem Pulver zum Vergleich vorgegeben werden. Wenn dann beispielsweise die (der) von dem ersten Sensor erfasste Menge, Masse und/oder Volumenstrom an unverfestigt gebliebenem pulverförmigen Aufbaumaterial (abgelöstes Pulver) den Referenzwert erreicht oder überschritten hat, dann kann der Saugmodus an der betreffenden Position oder Stelle des Objekts abgebrochen oder an einer anderen Stelle des Objekts fortgesetzt werden.

Auch kann vorgesehen sein, dass im Fluid-Einführungsmodus mit Hilfe des ersten Sensors anhand des Strömungswiderstands des in den wenigstens einen das Objekt durchdringenden Kanal eingeströmten Fluids erkannt werden kann, ob unverfestigt gebliebenes pulverförmiges Aufbaumaterial aus dem wenigstens einen Kanal entfernt wird oder entfernt worden ist, und/oder welche Menge, Masse und/oder Volumen an unverfestigt gebliebenem pulverförmigen Aufbaumaterial aus dem wenigstens einen Kanal entfernt wird oder entfernt worden ist. Denn wenn ein solcher Kanal weitgehend oder vollständig durchgängig ist, dann ist der Strömungswiderstand geringer als wenn in oder an den Kanalwänden des Kanals noch eine größere Menge losen Pulvers haftet. Der erste Sensor kann demzufolge ausgebildet und eingerichtet sein, dass er im Fluid-Einführungsmodus ein vom Strömungswiderstand des in den wenigstens einen das Objekt durchdringenden Kanal eingeströmten Fluids abhängiges Sensorsignal erzeugt.

Der Fluid-Einführungsmodus kann dann abhängig von dem Sensorsignal, das dann das Reinigungsergebnis des Kanals repräsentiert, gesteuert und insbesondere abgebrochen oder an einem anderen Kanal des Objekts fortgesetzt werden. Dabei kann auch ein Referenzwert für den Strömungswiderstand zum Vergleich vorgegeben werden. Wenn dann beispielsweise die (der) von dem ersten Sensor erfasste Strömungswiderstand den Referenzwert unterschritten hat, was ein Indiz für eine erfolgreiche Reinigung darstellt, dann kann der Fluid-Einführungsmodus an dem betreffenden Kanal abgebrochen und bedarfsweise an einem anderen Kanal begonnen werden.

Gemäß einer Weiterbildung des Verfahrens kann wenigstens ein zweiter Sensor verwendet werden, um im Saugmodus und/oder im Fluid-Einführungsmodus die wenigstens eine Öffnung und/oder die wenigstens Ausnehmung und/oder wenigstens eine Kanalöffnung des wenigstens einen das Objekt durchdringenden Kanals zu lokalisieren. Der wenigstens eine zweite Sensor kann ein optischer Sensor sein wie beispielsweise eine Kamera. Der wenigstens eine zweite Sensor kann insbesondere von dem mobilen Arm der Handhabungseinrichtung zur Lokalisierung geführt werden. Durch eine Verarbeitung der Sensorsignale des wenigstens einen zweiten Sensors in einer elektronischen Steuerung oder in der elektronischen Steuerung kann dann die wenigstens eine Öffnung und/oder die wenigstens Ausnehmung und/oder wenigstens eine Kanalöffnung des wenigstens einen das Objekt durchdringenden Kanals an dem Objekt lokalisiert werden.

Weiterhin sind in der Regel die (CAD-)Geometriedaten des wenigstens einen Objekts aus dem Bauprozess bekannt und können in einem Speicher der Steuerung gespeichert sein. Diese Geometriedaten umfassen dann auch die Position(en) der wenigstens einen Öffnung und/oder der wenigstens einen Ausnehmung und/oder der wenigstens einen Kanalöffnung des wenigstens einen das Objekt durchdringenden Kanals und können dann alternativ oder zusätzlich zur Steuerung des mobilen Arms der Handhabungseinrichtung herangezogen werden

Eine Steuerung des mobilen Arms der Handhabungseinrichtung wenigstens im Saugmodus und/oder im Fluid-Einführungsmodus kann daher insbesondere abhängig von den (CAD-)Geometriedaten des wenigstens einen Objekts und/oder abhängig von den Sensorsignalen des wenigstens einen zweiten Sensors erfolgen.

Bevorzugt kann bei dem Verfahren die Halte- oder Spanneinrichtung um wenigstens eine Drehachse angetrieben sein. Dann können die Drehung der Halte- oder Spanneinrichtung um die wenigstens eine Drehachse und die Bewegung des mobilen Arms der Handhabungseinrichtung durch die elektronische Steuerung derart koordiniert gesteuert sein, dass der Saugmodus und/oder der Schwingungsmodus und/oder der Einführungsmodus an unterschiedlichen Positionen des Objekts ausgeführt werden kann (können).

Das Verfahren und insbesondere die oben genannten Reinigungsmodi und/oder deren sequentielle Abfolge werden bevorzugt durch eine in der elektronischen Steuerung gespeicherte Software gesteuert. Weiterhin kann eine Mensch-/Maschine-Schnittstelle vorgesehen sein, um der elektronischen Steuerung Steuerungsparameter wie etwa Schwingungsfrequenz, -amplitude, Fluiddruck, Saugdruck usw. für die Reinigungsmodi vorzugeben.

Gemäß einem weiteren Aspekt wird eine Reinigungsvorrichtung zum Reinigen wenigstens eines dreidimensionalen Objekts von umgebendem, unverfestigt gebliebenem pulverförmigen Aufbaumaterial vorgeschlagen, welches insbesondere wenigstens eine Öffnung, wenigstens eine Ausnehmung und/oder wenigstens einen das Objekt durchdringenden Kanal aufweist, wobei das Objekt durch schichtweises Aufbringen und selektives Verfestigen eines pulverförmigen Aufbaumaterials im Laufe eines Bauprozesses hergestellt worden ist. Die Reinigungsvorrichtung umfasst wenigstens Folgendes:
a) eine Halte- oder Spanneinrichtung, welche ausgebildet und eingerichtet ist, das Objekt zu halten oder zu spannen, und
b) eine händisch oder von einer Steuerung gesteuerte Handhabungseinrichtung mit wenigstens einem mobilen Arm, welcher wenigstens einen Teil von Werkzeugmitteln führt, die ausgebildet und eingerichtet sind, um das in der Halte- oder Spanneinrichtung gehaltene oder gespannte Objekt von dem umgebendem, unverfestigt gebliebenem pulverförmigen Aufbaumaterial zu reinigen,
c) wobei der mobile Arm ausgebildet und eingerichtet ist, um den wenigstens einen Teil der Werkzeugmittel in unterschiedliche Positionen in Bezug zu dem Objekt zu führen, wobei
d) die Werkzeugmittel wenigstens Folgendes umfassen:
   d1) einen Schwingungsanreger, welcher eingerichtet und ausgebildet ist, um in einem Schwingungsmodus das Objekt durch Luftschall und/oder durch Körperschall zu Schwingungen anzuregen, und/oder
   d2) eine Fluid-Einführungseinrichtung, welche eingerichtet und ausgebildet ist, um in einem Einführungsmodus wenigstens ein Fluid gezielt in die wenigstens eine Öffnung und/oder in die wenigstens eine Ausnehmung und/oder in wenigstens eine Kanalöffnung des wenigstens einen das Objekt durchdringenden Kanals einzuführen oder einzuströmen, und/oder
   d3) eine Saugeinrichtung, welche eingerichtet und ausgebildet ist, um in einem einen Saugstrom zu erzeugen, durch welchen unverfestigt gebliebenes pulverförmiges Aufbaumaterial von dem Objekt abgesaugt wird, insbesondere gezielt aus der wenigstens einen Öffnung und/oder aus der wenigstens einen Ausnehmung und/oder aus wenigstens einer Kanalöffnung des wenigstens einen das Objekt durchdringenden Kanal.

Dabei kann die Steuerung ausgebildet und eingerichtet sein, um wenigstens zwei Reinigungsmodi des Schwingungsmodus, des Einführungsmodus und des Saugmodus parallel oder hintereinander (sukzessive) auszuführen.

Auch kann die Handhabungseinrichtung ausgebildet sein, um mit Hilfe des mobilen Arms wenigstens einen auswechselbaren Teil der Werkzeugmittel bedarfsweise aus einem Magazin zu entnehmen, (betriebsbereit) aufzunehmen oder in das Magazin abzulegen.

Bei der Reinigungsvorrichtung kann der wenigstens eine Schwingungsanreger mindestens Folgendes umfassen: einen Ultraschall-Schwingungsanreger, einen Rüttler und/oder einen Klopfer. Die Schwingungsamplitude und/oder die Schwingungsfrequenz und/oder die Anwendungsdauer der von dem Schwingungsanreger erzeugten Schwingungen kann parametrierbar und/oder vorgegeben sein.

Insbesondere kann der mobile Arm der Handhabungseinrichtung derart steuerbar sein, dass der Schwingungsanreger im Schwingungsmodus das Objekt kontaktiert oder von dem Objekt beabstandet ist. Wie oben erläutert erfolgt die Schwingungsanregung des Objekts dann durch Körperschall und/oder Luftschall.

Gemäß einer Weiterbildung kann die Fluid-Einführungseinrichtung wenigstens eine Düse oder eine Fluid-Strömungsöffnung aufweisen, wobei dann der mobile Arm der Handhabungseinrichtung durch die Steuerung oder händisch derart steuerbar sein kann, dass im Einführungsmodus die Düse oder die Fluid-Strömungsöffnung an der wenigstens einen Öffnung und/oder an der wenigstens einen Ausnehmung und/oder an der wenigstens einen Kanalöffnung des wenigstens einen das Objekt durchdringenden Kanals auf- oder ansetzt oder in die wenigstens eine Öffnung und/oder in die wenigstens eine Ausnehmung und/oder in die wenigstens eine Kanalöffnung des wenigstens einen das Objekt durchdringenden Kanals wenigstens teilweise eintaucht, um das Fluid dort einzuführen oder einzuströmen.

Auch kann die Fluid-Einführungseinrichtung ausgebildet und eingerichtet sein, um im Einführungsmodus einen konstanten oder pulsierenden Fluidstrom in die wenigstens eine Öffnung und/oder in die wenigstens eine Ausnehmung und/oder in die wenigstens eine Kanalöffnung des wenigstens einen das Objekt durchdringenden Kanals einzuführen oder einzuströmen.

Bevorzugt weist die Reinigungsvorrichtung wenigstens einen ersten, mit der Steuerung zusammenwirkenden Sensor auf, welcher Sensorsignale in die Steuerung einsteuert, wobei der wenigstens eine erste Sensor und die elektronische Steuerung ausgebildet und eingerichtet sind, dass die Steuerung abhängig von den Sensorsignalen
a) im Saugmodus erkennen kann, ob unverfestigt gebliebenes pulverförmiges Aufbaumaterial von dem Objekt und/oder aus der wenigstens einen Öffnung und/oder aus dem wenigstens einen Ausnehmung und/oder aus dem wenigstens einen das Objekt durchdringenden Kanal entfernt wird oder entfernt worden ist, und/oder welche Menge, Masse und/oder Volumen an unverfestigt gebliebenem pulverförmigen Aufbaumaterial von dem Objekt und/oder aus der wenigstens einen Öffnung und/oder aus der wenigstens einen Ausnehmung und/oder aus dem wenigstens einen das Objekt durchdringenden Kanal entfernt wird oder entfernt worden ist, und/oder
b) im Fluid-Einführungsmodus anhand des Strömungswiderstands des in die wenigstens eine Öffnung, die wenigstens eine Ausnehmung und/oder in den wenigstens einen das Objekt durchdringenden Kanal eingeströmten Fluids erkennen kann, ob unverfestigt gebliebenes pulverförmiges Aufbaumaterial aus der wenigstens eine Öffnung, Ausnehmung und/oder aus dem wenigstens einen Kanal entfernt wird oder entfernt worden ist, und/oder welche Menge, Masse und/oder Volumen an unverfestigt gebliebenem pulverförmigen Aufbaumaterial aus der wenigstens einen Öffnung, aus der wenigstens einen Ausnehmung und/oder aus dem wenigstens einen das Objekt durchdringenden Kanal entfernt wird oder entfernt worden ist.

Auch kann bei der Reinigungsvorrichtung wenigstens ein zweiter, mit der elektronischen Steuerung zusammenwirkender Sensor vorgesehen sein, und/oder die elektronische Steuerung ausgebildet und eingerichtet sein, gespeicherte (CAD-) Geometriedaten des wenigstens einen Objekts zu verwenden, um im Saugmodus und/oder im Fluid-Einführungsmodus die wenigstens eine Öffnung und/oder die wenigstens Ausnehmung und/oder die wenigstens eine Kanalöffnung den wenigstens einen das Objekt durchdringenden Kanals zu lokalisieren.

Gemäß einer Weiterbildung können bei der Reinigungsvorrichtung die Halte- oder Spanneinrichtung um wenigstens eine Drehachse angetrieben sein und die Drehung der Halte- und Spanneinrichtung um die wenigstens eine Drehachse und die Bewegung des mobilen Arms der Handhabungseinrichtung mittels der Steuerung derart koordiniert gesteuert werden, um den Saugmodus und/oder den Schwingungsmodus und/oder den Einführungsmodus an unterschiedlichen Stellen des Objekts insbesondere sukzessiv oder parallel auszuführen. Bevorzugt ist die Halte- oder Spanneinrichtung um eine erste Drehachse und eine in Bezug auf die erste Drehachse senkrechte zweite Drehachse schwenkbar.

Koordinierte Steuerung der Drehung der Halte- oder Spanneinrichtung und der Bewegung des mobilen Arms der Handhabungseinrichtung durch die Steuereinrichtung bedeutet, dass eine räumliche Ausrichtung zwischen dem auf der Halte- oder Spanneinrichtung gespannten Objekt und der von dem mobilen Arm der Handhabungseinrichtung geführten Werkzeugmittel derart stattfindet, dass die Werkzeugmittel an oder in dem Objekt in wenigstens einer vorbestimmten Position positioniert werden können, um das Objekt und insbesondere die wenigstens eine Öffnung, die wenigstens eine Ausnehmung und/oder den wenigstens einen Kanal von dem Aufbaumaterial zu reinigen.

Die Reinigungsvorrichtung umfasst hierzu beispielsweise einen ersten Motor, welcher über wenigstens eine erste Antriebswelle einen Drehteller rotatorisch treibt, auf welchem das Objekt mittels der Halte- oder Spanneinrichtung lösbar spannbar ist, wobei der Drehteller bevorzugt in einer insbesondere pulverdichten Reinigungskammer der Reinigungsvorrichtung angeordnet ist, in welcher die Reinigung des Objekts stattfindet. Wenigstens der Drehteller, der erste Motor, und die erste Antriebswelle sind an einem Dreharm mitdrehend gelagert, welcher durch einen zweiten Motor um die zweite Drehachse drehbar angetrieben ist, welche senkrecht in Bezug zur ersten Drehachse ist, um welche der Drehteller durch den ersten Motor drehbar angetrieben ist.

Gemäß einer Weiterbildung ist der Drehteller durch den ersten Motor um die erste Drehachse in einem Winkelbereich von 0 Grad bis 360 Grad und der Dreharm durch den zweiten Motor in einem zweiten Winkelbereich von 0 Grad bis 360 Grad drehbar angetrieben. Bevorzugt werden jeweils mehrere Drehungen um die erste Drehachse und/oder die zweite Drehachse ausgeführt.

Durch diese Maßnahmen ergibt sich eine einfache bauliche Möglichkeit, ein an der Halte- oder Spanneinrichtung des Drehtellers lösbar gespanntes Objekt um zwei Drehachsen (zwei Drehfreiheitsgrade) und in einem jeweils maximalen Winkelbereich zu drehen, um ein Ablösen von unverfestigt gebliebenem Aufbaumaterial von dem Objekt zu unterstützen.

Auch kann innerhalb der vorzugsweise pulverdichten Reinigungskammer wenigstens der mobile Arm der Handhabungseinrichtung angeordnet sein. Alternativ kann der mobile Arm auch durch eine Öffnung einer Wandung der Reinigungskammer hindurch in die Reinigungskammer insbesondere bedarfsweise hineinragen. Auch kann die Handhabungseinrichtung eine ortsfeste Basis aufweisen, an welcher der wenigstens eine mobile Arm beweglich antreibbar gelagert ist, wobei die Basis innerhalb oder außerhalb der Reinigungskammer angeordnet sein kann. Besonders bevorzugt umfasst die Handhabungseinrichtung wenigstens einen mehrachsigen Industrieroboter.

Bevorzugt kann bei der Reinigungsvorrichtung vorgesehen sein, dass
a) die Halte- oder Spanneinrichtung innerhalb der insbesondere pulverdichten Reinigungskammer mit einer Wandung angeordnet ist, in welcher wenigstens eine Öffnung ausgebildet ist, und
b) wenigstens ein durch die Steuerung steuerbares Schott vorgesehen ist, welches zwischen einer die Öffnung in der Wandung der Reinigungskammer freigebende Position und einer die Öffnung verschließenden Position steuerbar ist.

Gemäß einer Weiterbildung kann dann die Steuerung ausgebildet sein, dass sie das Schott in eine die Öffnung freigebende Position steuert, wenn der wenigstens eine mobile Arm die Werkzeugmittel zum Einsatz an oder in dem in der Halte-oder Spanneinrichtung gespannten Objekt bringt und sie das Schott ansonsten in eine die Öffnung verschließende Position steuert.

Beispielsweise kann zunächst der mobile Arm durch die elektronische Steuerung außerhalb der Reinigungskammer positioniert sein, wobei dann das Schott in die die Öffnung verschließende Position gesteuert ist. Dann kann die elektronische Steuerung das Schott in die die Öffnung frei gebende Position steuern und den mobilen Arm durch die Öffnung hindurchführen, um die von ihm geführten Werkzeugmittel zum Einsatz an oder in dem in der Halte- oder Spanneinrichtung gespannten Objekt zu bringen.

Gegebenenfalls wird die Reinigungskammer schutzgasgeflutet und/oder mit Absaugung entstaubt. Nach dem (weitgehenden) Entpulvern des Objekts wird das gelöste Pulver aus der Reinigungskammer ausgeführt (vorzugsweise automatisch abgesaugt) und dem Materialkreislauf bzw. einer Materialaufbereitung (Sieb) zur wieder zugefügt.

Es wird bevorzugt ein Verfahren zum Reinigen wenigstens eines dreidimensionalen Objekts in einer Reinigungsvorrichtung vorgeschlagen, welches insbesondere wenigstens eine Öffnung, eine Ausnehmung und/oder einen das Objekt durchdringenden Kanal aufweist, wobei das Objekt durch schichtweises Aufbringen und selektives Verfestigen eines pulverförmigen Aufbaumaterials im Laufe eines Bauprozesses hergestellt worden ist, von umgebendem, unverfestigt gebliebenem pulverförmigen Aufbaumaterial, wobei das Verfahren wenigstens die folgenden Schritte umfasst: das Objekt wird in einer Halte- oder Spanneinrichtung der Reinigungsvorrichtung gehalten oder gespannt, und das Objekt wird durch Werkzeugmittel von dem umgebendem, unverfestigt gebliebenem pulverförmigen Aufbaumaterial gereinigt, von denen wenigstens ein Teil von einem mobilen Arm einer insbesondere händisch oder von einer Steuerung gesteuerten Handhabungseinrichtung der Reinigungsvorrichtung geführt wird, wobei der wenigstens eine Teil der Werkzeugmittel von dem mobilen Arm in Bezug zu dem Objekt in unterschiedliche Positionen geführt werden kann, um an den Positionen jeweils wenigstens einen Reinigungsmodus auszuführen, wobei als Werkzeugmittel ein Schwingungsanreger herangezogen werden kann, welcher eingerichtet und ausgebildet ist, um in einem Schwingungsmodus das Objekt durch Körperschall zu Schwingungen anzuregen, wobei der wenigstens eine Schwingungsanreger von dem mobilen Arm im Schwingungsmodus derart geführt wird, dass der wenigstens eine Schwingungsanreger das Objekt direkt kontaktiert.

Alternativ oder zusätzlich kann bei dem Verfahren als Werkzeugmittel eine wenigstens eine Düse aufweisende Fluid-Einführungseinrichtung herangezogen werden, welche eingerichtet und ausgebildet ist, um in einem Einführungsmodus wenigstens ein Fluid gezielt in die wenigstens eine Öffnung und/oder in die wenigstens eine Ausnehmung und/oder in wenigstens eine Kanalöffnung des wenigstens einen das Objekt durchdringenden Kanal einzuführen oder einzuströmen, wobei der mobile Arm der Handhabungseinrichtung derart gesteuert wird, dass die Düse im Einführungsmodus in die wenigstens eine Öffnung und/oder in die wenigstens eine Ausnehmung und/oder in die wenigstens eine Kanalöffnung des wenigstens einen das Objekt durchdringenden Kanals wenigstens teilweise eingetaucht wird, um das Fluid dort einzuführen oder einzuströmen.

Alternativ oder zusätzlich kann bei dem Verfahren als Werkzeugmittel eine Saugeinrichtung herangezogen werden, welche einen Saugstrom führenden Saugschlauch oder einen Saugstrom führendes Saugrohr umfasst und welche eingerichtet und ausgebildet ist, um in einem Saugmodus einen Saugstrom zu erzeugen, durch welchen unverfestigt gebliebenes pulverförmiges Aufbaumaterial von dem Objekt abgesaugt wird, wobei der mobile Arm der Handhabungseinrichtung derart gesteuert wird, dass eine Düse oder Saugöffnung des Saugschlauchs oder des Saugrohrs gezielt in die wenigstens eine Öffnung und/oder in die wenigstens eine Ausnehmung und/oder in die wenigstens eine Kanalöffnung des wenigstens einen das Objekt durchdringenden Kanals eingeführt wird, um durch den Saugstrom das unverfestigt gebliebene pulverförmige Aufbaumaterial gezielt aus der wenigstens einen Öffnung und/oder aus der wenigstens einen Ausnehmung und/oder aus wenigstens einer Kanalöffnung des wenigstens einen das Objekt durchdringenden Kanals abzusaugen.

Es wird bevorzugt weiterhin eine Reinigungsvorrichtung zum Reinigen wenigstens eines dreidimensionalen Objekts vorgeschlagen, welches insbesondere wenigstens eine Öffnung, wenigstens eine Ausnehmung und/oder wenigstens einen das Objekt durchdringenden Kanal aufweist, wobei das Objekt durch schichtweises Aufbringen und selektives Verfestigen eines pulverförmigen Aufbaumaterials im Laufe eines Bauprozesses hergestellt worden ist, von unverfestigt gebliebenem pulverförmigen Aufbaumaterial, wobei die Reinigungsvorrichtung wenigstens Folgendes umfasst: eine Halte- oder Spanneinrichtung, welche ausgebildet und eingerichtet ist, das Objekt zu halten oder zu spannen, und eine insbesondere händisch oder von einer Steuerung steuerbare Handhabungseinrichtung mit wenigstens einem mobilen Arm, welcher wenigstens einen Teil von Werkzeugmitteln führt, die ausgebildet und eingerichtet sind, um das in der Halte- oder Spanneinrichtung gehaltene oder gespannte Objekt von dem umgebendem, unverfestigt gebliebenem pulverförmigen Aufbaumaterial zu reinigen, wobei der mobile Arm ausgebildet und eingerichtet ist, um den wenigstens einen Teil der Werkzeugmittel in unterschiedliche Positionen in Bezug zu dem Objekt zu führen und um an den Positionen jeweils wenigstens einen Reinigungsmodus auszuführen, wobei die Werkzeugmittel einen Schwingungsanreger umfassen, welcher eingerichtet und ausgebildet ist, um in einem Schwingungsmodus als Reinigungsmodus das Objekt durch Körperschall zu Schwingungen anzuregen, wobei der mobile Arm der Handhabungseinrichtung von der Steuerung derart gesteuert ist, dass der Schwingungsanreger im Schwingungsmodus das Objekt direkt kontaktiert.

Alternativ oder zusätzlich können bei der Vorrichtung die Werkzeugmittel eine wenigstens eine Düse aufweisende Fluid-Einführungseinrichtung umfassen, welche eingerichtet und ausgebildet ist, um in einem Einführungsmodus als Reinigungsmodus wenigstens ein Fluid gezielt in die wenigstens eine Öffnung und/oder in die wenigstens eine Ausnehmung und/oder in wenigstens eine Kanalöffnung des wenigstens einen das Objekt durchdringenden Kanals einzuführen oder einzuströmen, wobei der mobile Arm der Handhabungseinrichtung derart gesteuert ist, dass im Einführungsmodus die Düse in die wenigstens eine Öffnung und/oder in die wenigstens eine Ausnehmung und/oder in die wenigstens eine Kanalöffnung des wenigstens einen das Objekt durchdringenden Kanals wenigstens teilweise eintaucht, um das Fluid dort einzuführen.

Alternativ oder zusätzlich können bei der Vorrichtung die Werkzeugmittel eine Saugeinrichtung umfassen, welche einen Saugstrom führenden Saugschlauch oder ein Saugstrom führendes Saugrohr umfasst und welche eingerichtet und ausgebildet ist, um in einem Saugmodus als Reinigungsmodus einen Saugstrom zu erzeugen, durch welchen unverfestigt gebliebenes pulverförmiges Aufbaumaterial von dem Objekt abgesaugt wird, wobei der mobile Arm der Handhabungseinrichtung derart gesteuert ist, dass eine Düse oder Saugöffnung des Saugschlauchs oder des Saugrohrs (38) gezielt in die wenigstens eine Öffnung und/oder in die wenigstens eine Ausnehmung (22) und/oder in die wenigstens eine Kanalöffnung des wenigstens einen das Objekt durchdringenden Kanals eingeführt wird, um das unverfestigt gebliebene pulverförmige Aufbaumaterial gezielt aus der wenigstens einen Öffnung und/oder aus der wenigstens einen Ausnehmung und/oder aus der wenigstens einen Kanalöffnung des wenigstens einen das Objekt durchdringenden Kanals abzusaugen.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### Zeichnung

Nachstehend sind Ausführungsbeispiele der Erfindung in der Zeichnung dargestellt und in der nachfolgenden Beschreibung näher erläutert. In der Zeichnung zeigt
- Fig. 1: eine Seitenansicht einer Reinigungsvorrichtung nach der Erfindung gemäß einer ersten Ausführungsform mit einer Handhabungseinrichtung und mit Werkzeugmitteln, welche sich im inaktiven Zustand befinden;
- Fig. 2: die Reinigungsvorrichtung von Fig.1 mit der Handhabungseinrichtung und den Werkzeugmitteln im aktiven Zustand beim Durchführen eines Reinigungsmodus;
- Fig. 3: eine perspektivische Ansicht der Reinigungsvorrichtung nach der Erfindung gemäß einer zweiten Ausführungsform mit der Handhabungseinrichtung und den Werkzeugmitteln im aktiven Zustand beim Durchführen eines Reinigungsmodus;
- Fig. 4: eine Querschnittsdarstellung eines Objekts, an welchem Werkzeugmittel zur Reinigung positioniert sind.

### Beschreibung des Ausführungsbeispiels

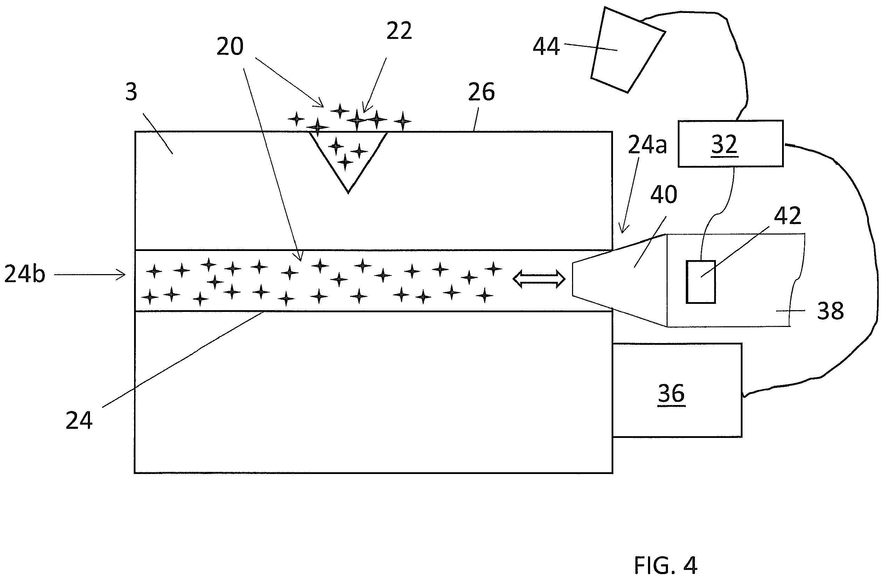

**Fig. 4** zeigt eine Querschnittsdarstellung eines dreidimensionales Objekt 3, wie beispielsweise eines Bauteil wie es in einem Schichtbauverfahren mit Hilfe von Computerdaten hergestellt worden ist, indem wiederholt dünne Schichten aus losem pulverförmigen Aufbaumaterial auf eine Bauplattform aufgetragen worden sind und jede einzelne Schicht selektiv zu einem Bauteil- oder Modellquerschnitt verfestigt wurde. Die Verfestigung erfolgte beispielsweise chemisch, indem mit Drucktechnologie Tröpfchen aus Kleber selektiv auf festgelegte Bereiche der Schichten aus losem pulverförmigen Aufbaumaterial aufgebracht werden. Im hier vorliegenden Fall wurde das selektive Verfestigen des pulverförmigen Aufbaumaterials mittels energiereicher Strahlung, hier insbesondere mittels einer Lasersinterung (Laserstrahlung) vorgenommen.

An dem im 3D-Druck entstandenen Objekt 3 haftet dann nach dem Bauprozess außen unverfestigt gebliebenes pulverförmiges Aufbaumaterial (loses Pulver) 20 an, das in **Fig. 4** durch die Sterne symbolisiert wird. Da das Objekt 3 hier beispielsweise eine Ausnehmung 22 und einen das Objekt 3 durchdringenden Kanal 24 mit zwei Kanalöffnungen 24a, 24b an der Außenfläche 26 des Objekts 3 aufweist, haftet auch an den Innenwänden der Ausnehmung 22 und des Kanals 24 loses Pulver an, wobei der Kanal 24 beispielsweise damit vollständig gefüllt ist.

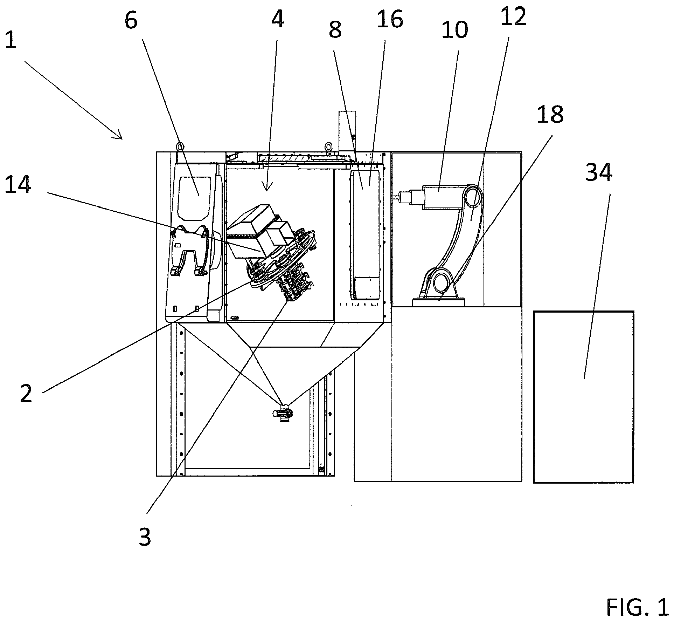

Mit einer in **Fig.1** bis **Fig. 3** gezeigten Reinigungsvorrichtung 1 soll nun in einem Verfahren das lose Pulver 20 von dem Objekt 4 und insbesondere aus der Ausnehmung 22 und aus dem Kanal 24 effektiv entfernt werden.

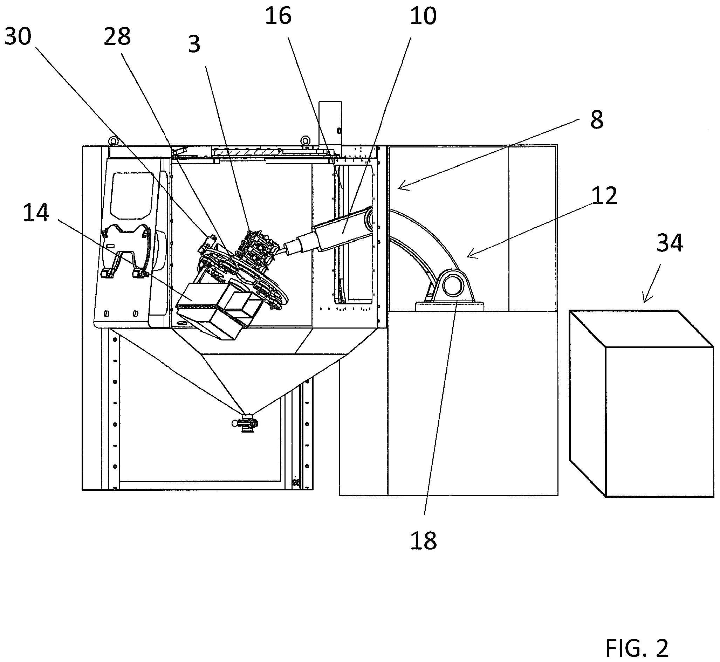

**Fig. 1** und **Fig. 2** zeigen eine Seitenansicht einer ersten Ausführungsform einer Reinigungsvorrichtung 1, durch welche das lose Pulver 20 von dem Objekt 3 entfernt wird. Die Reinigung soll hier beispielsweise das Entfernen von Restpulver betreffen, welches nach dem Auspacken des Objekts 3 aus dem Pulverkuchen noch anhaftet. Die Reinigungsvorrichtung 1 wird beispielsweise durch eine in **Fig. 4** gezeigte elektronische Steuerung 32 in koordinierter Weise gesteuert, welche eine CPU beinhaltet, deren Betrieb durch ein Computerprogramm gesteuert wird, in welchem auch ein weiter unten noch beschriebenes Verfahren implementiert ist.

Der Bauprozess und der Reinigungsprozess werden hier beispielsweise an voneinander getrennten Orten und in voneinander getrennten Vorrichtungen, nämlich in einer hier nicht gezeigten Schichtbauvorrichtung und der hier gezeigten Reinigungsvorrichtung 1 vollzogen.

Das Objekt 3 ist während des Reinigungsprozesses in der Reinigungsvorrichtung 1 über eine hier unvollständig gezeigte Halte- oder Spanneinrichtung 28 auf einem Drehteller 2 der Reinigungsvorrichtung 1 eingespannt. Die Reinigungsvorrichtung 1 umfasst eine durch eine Wandung begrenzte staubdichte Reinigungskammer 4, in welcher der Reinigungsprozess bevorzugt stattfindet und welche eine verschließbare erste Öffnung 6 zum Be- und Entladen des Objekts 3 sowie eine zweite Öffnung 8 für einen mobilen Arm 10 einer Handhabungseinrichtung 12 aufweist.

Der Drehteller 2 ist hier beispielsweise um eine erste Drehachse mittels eines ersten Motors drehend antreibbar, insbesondere in einem Winkel von 0 bis 360 Grad, Weiterhin ist der Drehteller 2 an einem Dreharm 14 gelagert, der um eine zweite Drehachse mittels eines zweiten Motors drehbar ist, wobei die zweite Drehachse senkrecht zur ersten Drehachse ist.

Der Drehteller 2 wird durch den ersten Motor um die erste Drehachse beispielsweise in einem Winkelbereich von 0 Grad bis 360 Grad und der Dreharm 14 durch den zweiten Motor in einem zweiten Winkelbereich von beispielsweise 0 Grad bis 360 Grad drehbar angetrieben. Der erste Motor und der zweite Motor sind bevorzugt Servomotoren, welche von einer elektronischen Steuerung 32 gesteuert werden, um gewünschte Drehlagen des Drehtellers 2 und damit des darauf gespannten Objekts 3 zu erzielen. Dadurch kann das auf dem Drehteller 3 gespannte Objekt 3 in eine Vielzahl von räumlichen Positionen gedreht werden, was ein Lösen von losem Pulver 20 (nicht verfestigtem pulverförmigen Aufbaumaterial) durch die Reinigungsvorrichtung 1 fördert. Daneben umfasst die Reinigungsvorrichtung 1 beispielsweise eine hier nicht gezeigte Absaugvorrichtung zum Absaugen von abgelöstem Pulver aus der Reinigungskammer 4.

An dem Drehteller 2 kann optional ein pneumatischer Rüttler 30 als weiterer Teil der Reinigungsvorrichtung 1 angeordnet sein, welcher den Drehteller 2 und damit auch das darauf gespannte Objekt 3 in Vibrationen versetzt, um loses Pulver von dem Objekt 3 abzulösen. Die Steuerung des Rüttlers erfolgt wiederum durch die elektronische Steuerung 32 der Reinigungsvorrichtung 1, durch welche der Rüttler 30 bei Bedarf oder automatisch aktiviert wird.

Das Objekt 3 wird auch durch mittels des mobilen Arms 10 der hier beispielsweise als Industrieroboter ausgeführten Handhabungseinrichtung 12 geführter Werkzeuge von dem losen Pulver gereinigt. Vorzugsweise werden die Werkzeuge von dem mobilen Arm 10 der Handhabungseinrichtung 12 bedarfsweise aus einem hier beispielsweise außerhalb der Reinigungskammer 4 angeordneten Magazin 34 aufgenommen, damit ein Reinigungsmodus ausgeführt werden kann, und nach Gebrauch oder Beendigung des Reinigungsmodus dort wieder abgelegt. Während eines Reinigungsmodus werden dann das betreffende Werkzeug und das Objekt 3 bevorzugt in unterschiedliche Positionen relativ zueinander geführt, beispielsweise durch die elektronische Steuerung 32 gesteuert, um an den Positionen dann jeweils den Reinigungsmodus auszuführen.

Als Werkzeug kann von dem mobilen Arm 10 beispielsweise ein Schwingungsanreger 36 (**Fig. 4**) aus dem Magazin 34 aufgenommen werden, welcher eingerichtet und ausgebildet ist, um in einem Schwingungsmodus das Objekt 3 durch Luftschall und/oder durch Körperschall zu Schwingungen direkt oder indirekt anzuregen. Da der Schwingungsanreger 36 an dem mobilen Arm 10 der Handhabungseinrichtung 12 aufgenommen wird, kann der Schwingungsanreger 36 flexibel, insbesondere sukzessive an unterschiedliche Stellen und Positionen des Objekts 3 herangeführt bzw. angedockt werden. Bevorzugt wird der Schwingungsanreger 36 hier direkt an das Objekt 3 herangeführt, um es insbesondere unter Druckkraft zu kontaktieren, wie **Fig. 4** illustriert. Dann wird der vom Schwingungsanreger erzeugten Schwingungen direkt als Körperschall auf das Objekt 3 übertragen, um es zu Schwingungen anzuregen. Wenn das Objekt 3 in Schwingungen versetzt ist, können diese helfen, dass das lose Pulver 20 von dem Objekt 3, aus der Ausnehmung 22 und aus dem Kanal 24 abfließt. Dabei kann der Schwingungsanreger 36 durch den mobilen Arm 10 an unterschiedliche Stellen des Objekts 3 flexibel und insbesondere sukzessiv herangeführt werden. Der Schwingungsmodus kann dann insbesondere durch die elektronische Steuerung 32 im Hinblick auf die Anregungsfrequenz und/oder Anregungsamplitude der vom Schwingungserreger 36 erzeugten Schwingungen gesteuert werden, insbesondere automatisch oder abhängig von über eine hier nicht gezeigte Mensch-/Maschine-Schnittstelle eingegebenen Vorgaben einer Bedienperson.

Auch kann der mobile Arm 10 als Werkzeug eine Fluid-Einführungseinrichtung aus dem Magazin 34 entnehmen, welche eingerichtet und ausgebildet ist, in einem Einführungsmodus ein Fluid, hier beispielsweise Druckluft gezielt in die Ausnehmung 22 und in eine Kanalöffnung 24a des Kanals 24 des Objekts 3 einzuführen oder einzuströmen. Die in die Ausnehmung 22 und in die Kanalöffnung 24a des Kanals 24 eingeströmte Druckluft sorgt dann dafür, dass loses Pulver 20 aus der Ausnehmung 22 und aus dem Kanal 24 abfließen kann. Wie in **Fig. 4** dargestellt, kann die Fluid-Einführungseinrichtung eine an einem die Druckluft zuführenden Rohr oder Schlauch 38 endseitig ausgebildete Düse 40 aufweisen, wobei das Rohr oder der Schlauch 38 zusammen mit der Düse 40 dann von dem mobilen Arm 10 derart positioniert wird, dass die Düse 40 beispielsweise in die Kanalöffnung 24a des Kanals 24 eintaucht und dann, wie durch den in **Fig. 4** nach links weisenden Pfeil symbolisiert wird, Druckluft in den Kanal 24 unter Druck eingeströmt wird. Dann ist leicht vorstellbar, dass das lose Pulver 20 durch den Staudruck der einströmenden Druckluft dann aus der anderen Kanalöffnung 24b des Kanals 24 herausgedrückt wird. Auch kann die Düse 40 von dem mobilen Arm 10 derart positioniert werden, dass sie in die Ausnehmung 22 hineinragt und dann dort für ein Ausblasen des losen Pulvers 20 sorgt.

Auch kann im Einführungsmodus eine konstante oder pulsierende Einführung von Druckluft in die Ausnehmung 22 und in die Kanalöffnung 24a des Kanals 24 stattfinden. Als Fluid kann neben Druckluft wenigstens Folgendes verwendet werden: wenigstens ein Gas, insbesondere ein inertes Schutzgas und/oder feste Partikel. Denkbar ist auch jegliches Fluid, welches in Strömungsform eingesetzt werden kann.

Im Einführungsmodus kann dann insbesondere durch die elektronische Steuerung 32 die Menge und/oder das Volumen der von der Fluid-Einführungseinrichtung ausgeströmten Druckluft gesteuert werden, insbesondere automatisch oder abhängig von über die Mensch-/Maschine-Schnittstelle eingegebenen Vorgaben einer Bedienperson.

Auch kann als Werkzeug eine Saugeinrichtung von dem mobilen Arm 10 aus dem Magazin 34 aufgenommen werden, welche eingerichtet und ausgebildet ist, um in einem Saugmodus einen Saugstrom zu erzeugen, durch welchen loses Pulver 20 gezielt aus der Ausnehmung 22 und dem Kanal 24 abgesaugt wird. Wie in **Fig. 4** dargestellt, kann die Saugeinrichtung ebenfalls eine an einem den Saugstrom führenden Rohr oder Schlauch 38 endseitig ausgebildete Düse 40 aufweisen, die dann von dem mobilen Arm 10 derart positioniert wird, dass sie in die Kanalöffnung 24a des Kanals 24 eintaucht, und dann wie durch den in **Fig. 4** nach rechts weisenden Pfeil symbolisiert, den Kanal 24 unter einen Saugstrom setzt, um das lose Pulver 20 von dort abzusaugen.

Die Reinigungsmodi umfassen hier daher den Schwingungsmodus, den Einführungsmodus und den Saugmodus. Es kann dann bei dem Verfahren vorgesehen sein, dass wenigstens zwei Reinigungsmodi unter dem Schwingungsmodus, dem Einführungsmodus und dem Saugmodus parallel oder hintereinander (sukzessive) und an verschiedenen Positionen des Objekts 3 ausgeführt werden, insbesondere an oder in Öffnungen, Ausnehmungen und/oder Kanälen des Objekts 3. Der mobile Arm 10, der dabei das entsprechende Werkzeug aufnimmt und führt, kann dabei durch die elektronische Steuerung 32 automatisch oder auch händisch von einer Bedienperson gesteuert sein.

Vorteilhaft kann sein, dass als erster Reinigungsmodus beispielsweise der Schwingungsmodus ausgeführt wird, um wenigstens einen Teil des losen Pulvers 20 von dem Objekt 3, insbesondere von den Innenwänden der Ausnehmung 22 und des Kanals 24 abzulösen. Am Anschluss daran kann beispielsweise der Saugmodus und/oder der Einführungsmodus durchgeführt werden, um das abgelöste, lose Pulver 20 aus der Ausnehmung 22 und aus dem Kanal 24 durch Saugen und/oder Blasen zu entfernen.

Bei dem Verfahren wird daher bevorzugt ein auswechselbarer Teil des Werkzeugs bedarfsweise aus dem Magazin 34 entnommen, an dem mobilen Arm 10 aufgenommen und nach dem Durchführen des jeweiligen Reinigungsmodus wieder in dem Magazin 34 abgelegt.

Der auswechselbare Teil des Werkzeugs ist dann der Teil des Werkzeugs, welcher an oder von dem mobilen Arm 10 abhängig von dem jeweils aktiven oder aktivierten Reinigungsmodus (Schwingungsmodus, Einführungsmodus, Saugmodus) aufgenommen wird. Für einen Wechsel des Reinigungsmodus wird dann der auswechselbare Teil des Werkzeugs des vorangehenden Reinigungsmodus in das Magazin 34 abgelegt und dafür der auswechselbare Teil des Werkzeugs dem Magazin 34 entnommen, welcher für den folgenden Reinigungsmodus verwendet werden soll. Diese Schritte können bevorzugt von dem mobilen Arm 10 der Handhabungseinrichtung und automatisch gesteuert durchgeführt werden. Alternativ können sie aber auch händisch durch eine Bedienperson ausgeführt werden.

Demgegenüber kann ein Versorgungsteil des Werkzeugs bevorzugt an oder in dem mobilen Arm 10 wenigstens teilweise ausgebildet sein, wie beispielsweise eine Fluidversorgung, eine elektrische Energieversorgung und/oder eine Druckluftversorgung und/oder eine Partikelversorgung und/oder eine Signalverbindung zu der elektronischen Steuerung 32 für den wechselbaren Teil des Werkzeugs. Eine Verbindung des auswechselbaren Teils des Werkzeugs mit dem Versorgungsteil des Werkzeugs kann dann bevorzugt bei der Aufnahme des auswechselbaren Teils des Werkzeugs durch den mobilen Arm 10 automatisch zustande kommen, wobei hierfür geeignete elektrische, pneumatische und/oder hydraulische Schnittstellen vorgesehen sind. Insbesondere kann ein für wenigstes zwei Reinigungsmodi gemeinsamer Versorgungsteil an dem mobilen Arm 10 ausgebildet sein.

Alternativ kann der Versorgungsteil aber auch getrennt von dem mobilen Arm 10 ausgeführt sein und insbesondere flexible Schläuche und/oder Kabel umfassen, die bereits mit dem auswechselbaren Teil verbunden sind. Der Versorgungsteil kann dann bereits mit dem auswechselbaren Teil verbunden sein, wenn sich dieses noch in dem Magazin 34 befindet, wobei dann der Versorgungsteil von dem mobilen Arm 10 mitbewegt wird, wenn der auswechselbare Teil von diesem aufgenommen wird bzw. wenn der auswechselbare Teil des Werkzeugs an dem Objekt 3 positioniert wird.

Beispielsweise bei dem Schwingungsmodus kann der auswechselbare Teil des Werkzeugs durch einen Aktuator des Schwingungsanregers 36 gebildet werden, während der Versorgungsteil, der hier beispielsweise eine Verkabelung zur elektrischen Energieversorgung und Steuerung des Aktuators umfasst, bereits an dem mobilen Arm 10 ausgebildet oder von diesem getragen ist. Eine Koppelung zwischen dem Schwingungsanreger 36 und elektrischen Kontakten der mit dem mobilen Arm 10 geführten Verkabelung kann dann beispielsweise bei der Aufnahme des Schwingungserregers 36 durch den mobilen Arm automatisch entstehen oder auch händisch von der Bedienperson herbeigeführt werden.

Der Schwingungsanreger 36 kann mindestens Folgendes umfassen: einen Ultraschall-Schwingungsanreger, einen Rüttler und/oder einen Klopfer. Es hat sich herausgestellt, dass eine an verschiedenen Stellen des Objekts 3 durchgeführte Anregung durch Ultraschallschwingungen ein besonders gutes Reinigungsergebnis erzielt.

Der Schwingungsanreger 36 bzw. dessen Aktuator kann von dem mobilen Arm 10 im Schwingungsmodus derart geführt werden, dass er das Objekt 3 insbesondere direkt kontaktiert, wie das Beispiel von **Fig. 4** veranschaulicht, oder von dem Objekt beabstandet ist. Bei einem bevorzugt herbeigeführten direkten Kontakt des Schwingungserregers 36 mit dem Objekt 3 **(****Fig. 4****)** wird der Körperschall von dem Schwingungsanreger direkt in das Objekt 3 eingeleitet, insbesondere sukzessive an verschiedenen Stellen des Objekts 3 wie beispielsweise an der Außenfläche des Objekts 3 durch eine entsprechende Positionierung des Schwingungserregers 36 mittels des mobilen Arms 10. Der Kontakt des Schwingungsanregers mit dem Objekt 3 erfolgt bevorzugt unter Druckkraft, um die Körperschallübertragung zu verbessern. Auch kann der Kontakt des Schwingungsanregers 36 mit dem Objekt 3unter einem Formschluss herbeigeführt werden.

Ein solcher Formschluss zwischen dem Werkzeugs und dem Objekt 3 kann in jedem Reinigungsmodus und insbesondere durch die Steuerung 32 automatisch oder auch händisch durch eine Bedienperson hergestellt werden. Hierzu kann das Werkzeug Eingriffsmittel aufweisen, die zum Herbeiführen des Formschlusses an dem Objekt 3 angreifen.

Bei beabstandeter Positionierung des Schwingungsanregers 36 von dem Objekt 3 wird der Körperschall des Schwingungserregers 36 zunächst in Luftschall der Umgebungsluft gewandelt, der dann wiederum das Objekt 3 zu Körperschallschwingungen anregt. Diese Art der Schwingungsanregung kann ebenfalls an verschiedenen Stellen des Objekts 3 durch eine entsprechende Positionierung des Schwingungsanregers 36 mittels des mobilen Arms 10 herbeigeführt werden.

Bei dem Verfahren kann auch ein erster, gemäß **Fig. 4** beispielsweise in dem Schlauch oder Rohr 38 angeordneter Sensor 42 verwendet werden, der Sensorsignale erzeugt, anhand welcher die mit dem ersten Sensor verbundene Steuerung 32 im Saugmodus durch eine Auswertung der Sensorsignale erkennen kann, ob loses Pulver 20 aus der Ausnehmung 22 und aus dem Kanal 24 entfernt wird oder entfernt worden ist. Auch ist die elektronische Steuerung 32 bevorzugt ausgebildet, dass sie anhand der Sensorsignale des ersten Sensors 42 die Menge, Masse und/oder das Volumen an losem Pulver 20 feststellen kann, die von dem Objekt 3 und/oder aus der Ausnehmung 22 und/oder aus dem Kanal 24 entfernt wird oder entfernt worden ist. Der erste Sensor 42 ist dann bevorzugt ausgebildet, um eine Menge, Masse oder einen Volumenstrom des in dem Rohr oder Schlauch 38 geführten losen Pulvers 20 zu messen und als Sensorsignal in die Steuerung 32 zur Auswertung einzusteuern und zu verarbeiten.

Der Saugmodus kann dann abhängig von dem Sensorsignal des ersten Sensors 42, das dann das Reinigungsergebnis repräsentiert, gesteuert und insbesondere abgebrochen oder (an einer anderen Stelle des Objekts 3) fortgesetzt werden. Dabei kann auch ein Referenzwert für die Menge, die Masse und/oder den Volumenstrom an abgelöstem Pulver zum Vergleich vorgegeben werden. Wenn dann beispielsweise die (der) von dem ersten Sensor 42 erfasste Menge, Masse und/oder Volumenstrom an abgelöstem losem Pulver 20 den Referenzwert erreicht oder überschritten hat, dann kann der Saugmodus an der betreffenden Stelle des Objekts 3 abgebrochen und an einer anderen Stelle des Objekts 3 fortgesetzt werden.

Auch kann vorgesehen sein, dass im Fluid-Einführungsmodus mit Hilfe des ersten Sensors 42 anhand des Strömungswiderstands der in den Kanal 24 eingeströmten Druckluft erkannt werden kann, ob und wieviel loses Pulver 20 aus dem Kanal 24 entfernt wird oder entfernt worden ist. Denn wenn der Kanal 24 aufgrund fortgeschrittener Reinigung weitgehend oder vollständig von der einen Kanalöffnung 24a bis zur anderen Kanalöffnung 24b durchgängig ist, dann ist der Strömungswiderstand geringer als wenn an den Kanalwänden des Kanals 24 noch eine größere Menge losen Pulvers 20 anhaftet.

Der Fluid-Einführungsmodus kann dann abhängig von dem Sensorsignal des ersten Sensors 42, das dann das Reinigungsergebnis repräsentiert, gesteuert und insbesondere abgebrochen und beispielsweise an einer anderen Stelle des Objekts 3 fortgesetzt werden. Dabei kann auch ein Referenzwert für den Strömungswiderstand zum Vergleich vorgegeben werden. Wenn dann beispielsweise die (der) von dem ersten Sensor 42 erfasste Strömungswiderstand den Referenzwert unterschritten hat, dann kann der Fluid-Einführungsmodus an dem betreffenden Kanal 24 abgebrochen und bedarfsweise an einem anderen Kanal des Objekts 3 begonnen werden.

Zur Lokalisierung der Ausnehmung 22 und der Kanalöffnung 24a des Kanals 24 an dem Objekt 3 werden hier bevorzugt (CAD-) Geometriedaten des Objekts 3 verwendet, wie sie beispielsweise aus dem Bauprozess bereits bekannt und dann in einem Speicherbereich der Steuerung 32 abgespeichert sind. Denn diese (CAD-) Geometriedaten umfassen die Positionen der Ausnehmung 22 und der Kanalöffnung 24a des Objekts 3. Dann müssen die Routinen der Steuerung 32 und das Objekt 3 lediglich auf einem gemeinsamen Koordinatensystem basieren, um den mobilen Arm 10 in beschriebener Weise an dem Objekt 3 gezielt zu positionieren.

Alternativ oder zusätzlich kann hierfür auch ein zweiter, mit der Steuerung 32 verbundener beispielsweise optischer Sensor 44 verwendet werden, der beispielsweise von dem mobilen Arm 10 getragen wird und der beispielsweise eine Kamera umfasst, deren durch die Steuerung 32 ausgewerteten Bilddaten dann auf einem Bildschirm der Reinigungsvorrichtung 1 dargestellt werden. Dann kann der zweite Sensor 44 beispielsweise von dem mobilen Arm 10 der Handhabungseinrichtung 12 zur Lokalisierung der Ausnehmung 22 und der Kanalöffnung 24a des Kanals 24 an dem Objekt 3 händisch oder automatisch gesteuert entlanggeführt werden.

Auch kann ein insbesondere von dem mobilen Arm 10 geführter optischer Sensor wie eine Kamera verwendet werden, um das Reinigungsergebnis zu überprüfen, indem der optische Sensor beispielsweise Bilder und/oder Videos von dem Objekt 3 bzw. von der Ausnehmung 22 und dem Kanal 24 des Objekts 3 auf einen Bildschirm der Reinigungsvorrichtung 1 überträgt.

Nicht zuletzt kann der mobile Arm 10 auch einen thermischen Sensor aufnehmen oder tragen, welcher dann die Temperatur des Objekts 3 und/oder von bestimmten Positionen oder Stellen des Objekts 3 erfasst. Denn durch die Schwingungsanregung des Objekts 3 kann reibungsbedingt eine Temperaturerhöhung des Objekts 3 stattfinden, wobei die Sensorsignale des thermischen Sensors zur Temperaturüberwachung herangezogen werden können. Insbesondere kann dann ein Vergleich mit einem Temperaturgrenzwert erfolgen, um den Reinigungsprozess bei einem Überschreiten des Temperaturgrenzwerts zu beenden oder dessen Reinigungsparameter zu verändern.

Die Drehung der Halte- oder Spanneinrichtung 28 um die beiden Drehachsen und die Bewegungen des mobilen Arms 10 der Handhabungseinrichtung 12 zur Reinigung des Objekts 3 werden bevorzugt mittels der elektronischen Steuerung 32 parallel und koordiniert gesteuert. Dabei kann der Drehteller 2 während der Drehung um die beiden Drehachsen bevorzugt durch den Rüttler 30 in Schwingungen versetzt werden.

Parallele und koordinierte Steuerung der Drehung der Halte- oder Spanneinrichtung 28 und der Bewegung des mobilen Arms 10 der Handhabungseinrichtung 12 durch die elektronische Steuerung 32 bedeutet, dass eine räumliche Ausrichtung zwischen dem von der Halte- oder Spanneinrichtung 28 gehaltenen Objekt 3 und dem (gerade) von dem mobilen Arm 10 geführten Werkzeug derart stattfindet, dass das Werkzeug das Objekt 3 gezielt an einer bestimmten Position, wie beispielsweise an der Ausnehmung 22 und/oder an der Kanalöffnung 24a des Kanals 24 von dem losen Pulver 20 reinigen kann.

Weiterhin kann gemäß der Ausführungsform von **Fig. 1** und **Fig. 2** ein durch die elektronische Steuerung 32 steuerbares Schott 16 vorgesehen sein, welches zwischen einer die zweite Öffnung 8 in der Wandung der Reinigungskammer 4 freigebende Position und einer die zweite Öffnung 8 verschließenden Position steuerbar ist.

Die Handhabungseinrichtung 12 weist eine ortsfeste Basis 18 auf, an welcher mobile Arm 10 beweglich antreibbar gelagert ist, wobei die Basis 18 hier beispielsweise außerhalb der Reinigungskammer 4 derart angeordnet ist, dass der mobile Arm 10 durch die zweite Öffnung 8 in der Wandung der Reinigungskammer 4 hindurch das jeweils geführte Werkzeug zum Einsatz an dem am Drehteller 2 gespannten Objekt 3 bringen kann.

Die elektronische Steuerung 32 ist dabei bevorzugt ausgebildet, dass sie das Schott 16 lediglich dann in die die zweite Öffnung 8 freigebende Position steuert **(****Fig. 2****),** wenn der mobile Arm 10 das aus dem Magazin 34 aufgenommene und geführte Werkzeug zum Einsatz an der betreffenden Position des Objekts 3 bringt und sie das Schott 16 ansonsten in die die zweite Öffnung 8 verschließende Position steuert **(****Fig. 1****).**

Beispielsweise kann zunächst in der die zweite Öffnung 8 verschließenden Position des Schotts 16 und bei folglich durch die elektronische Steuerung 32 außerhalb der Reinigungskammer 4 positioniertem mobilem Arm 10 loses Pulver 20 von einer Außenfläche des Objekts 3 alleine durch Drehen des Drehtellers 2 um die beiden Drehachsen und Aktivieren des Rüttlers entfernt werden **(****Fig. 1****).** Beispielsweise erst dann wird das Schott 16 durch die elektronische Steuerung in die die zweite Öffnung 8 frei gebende Position gesteuert und der mobile Arm 10 durch die zweite Öffnung 8 hindurchgeführt, um das von ihm geführte Werkzeug, beispielsweise die Saugeinrichtung an der Ausnehmung und an dem Kanal des Objekt 3 zu positionieren, um loses Pulver aus der Ausnehmung und dem Kanal des Objekts 3 abzusaugen.

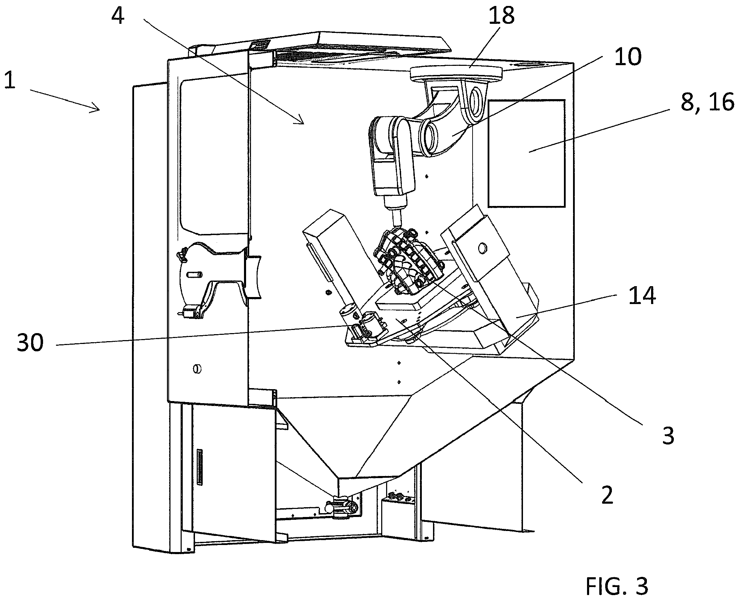

**Fig. 3** zeigt eine zweite Ausführungsform der Reinigungsvorrichtung, bei welcher die Handhabungseinrichtung 12 samt dem mobilen Arm 12 innerhalb der Reinigungskammer 4 angeordnet ist. Der mobile Arm 10 kann dann das jeweilige Werkzeug aus dem beispielsweise wiederum außerhalb der Reinigungskammer 4 angeordneten Magazin 34 durch die zweite Öffnung 8 hindurch aufnehmen, die hierzu von dem Schott 16 freigegeben wird. Ansonsten ist die Reinigungsvorrichtung1 wie oben beschrieben aufgebaut und auch das Verfahren wird wie oben beschrieben ausgeführt.

### BEZUGSZAHLENLISTE

- 1: Reinigungsvorrichtung
- 2: Drehteller
- 3: Objekt
- 4: Reinigungskammer
- 6: erste Öffnung
- 8: zweite Öffnung
- 10: mobiler Arm
- 12: Handhabungseinrichtung
- 14: Dreharm
- 16: Schott
- 18: Basis
- 20: loses Pulver
- 22: Ausnehmung
- 24: Kanal
- 24a/b: Kanalöffnungen
- 26: Außenfläche
- 28: Halte- und Spanneinrichtung
- 30: Rüttler
- 32: elektronische Steuerung
- 34: Magazin
- 36: Schwingungsanreger
- 38: Rohr oder Schlauch 38
- 40: Düse
- 42: erster Sensor
- 44: zweiter Sensor

## Patentansprüche

1. Verfahren zum Reinigen wenigstens eines dreidimensionalen Objekts (3), welches insbesondere wenigstens eine Öffnung, eine Ausnehmung und/oder einen das Objekt (3) durchdringenden Kanal (24) aufweist, in einer Reinigungsvorrichtung (1), wobei das Objekt (3) durch schichtweises Aufbringen und selektives Verfestigen eines pulverförmigen Aufbaumaterials im Laufe eines Bauprozesses hergestellt worden ist, von umgebendem, unverfestigt gebliebenem pulverförmigen Aufbaumaterial (20), wobei das Verfahren wenigstens die folgenden Schritte umfasst:
a) das Objekt (3) wird in einer Halte- oder Spanneinrichtung (28) der Reinigungsvorrichtung (1) gehalten oder gespannt, und
b) das Objekt (3) wird durch Werkzeugmittel von dem umgebendem, unverfestigt gebliebenem pulverförmigen Aufbaumaterial (20) gereinigt, von denen wenigstens ein Teil von einem mobilen Arm (10) einer insbesondere händisch oder von einer Steuerung (32) gesteuerten Handhabungseinrichtung (12) der Reinigungsvorrichtung (1) geführt wird, wobei
c) der wenigstens ein Teil der Werkzeugmittel von dem mobilen Arm (10) in Bezug zu dem Objekt (3) in unterschiedliche Positionen geführt werden kann, um an den Positionen jeweils wenigstens einen Reinigungsmodus auszuführen, **dadurch gekennzeichnet, dass**
d) als Werkzeugmittel wenigstens Folgendes herangezogen wird:
d1) ein Schwingungsanreger (36), welcher eingerichtet und ausgebildet ist, um in einem Schwingungsmodus das Objekt (3) durch Luftschall und/oder durch Körperschall zu Schwingungen anzuregen, und/oder
d2) eine Fluid-Einführungseinrichtung (38, 40), welche eingerichtet und ausgebildet ist, um in einem Einführungsmodus wenigstens ein Fluid gezielt in die wenigstens eine Öffnung und/oder in die wenigstens eine Ausnehmung (22) und/oder in wenigstens eine Kanalöffnung (24a, 24b) des wenigstens einen das Objekt (3) durchdringenden Kanal (24) einzuführen oder einzuströmen, und/oder
d3) eine Saugeinrichtung, welche eingerichtet und ausgebildet ist, um in einem Saugmodus einen Saugstrom zu erzeugen, durch welchen unverfestigt gebliebenes pulverförmiges Aufbaumaterial (20) von dem Objekt (3) abgesaugt wird, insbesondere gezielt aus der wenigstens einen Öffnung und/oder aus der wenigstens einen Ausnehmung (22) und/oder aus wenigstens einer Kanalöffnung (24a, 24b) des wenigstens einen das Objekt (3) durchdringenden Kanals (24).

2. Verfahren nach Anspruch 1, **dadurch gekennzeichnet, dass** wenigstens zwei Reinigungsmodi unter dem Schwingungsmodus, dem Einführungsmodus und dem Saugmodus parallel oder hintereinander ausgeführt werden.

3. Verfahren nach Anspruch 1 oder 2, **dadurch gekennzeichnet, dass** wenigstens ein auswechselbarer Teil der Werkzeugmittel bedarfsweise einem Magazin (34) entnommen, an dem mobilen Arm (10) aufgenommen oder in das Magazin (34) abgelegt wird.

4. Verfahren nach einem der vorhergehenden Ansprüche, **dadurch gekennzeichnet, dass** der wenigstens eine Schwingungsanreger (36) mindestens Folgendes umfasst: einen Ultraschall-Schwingungsanreger und/oder einen Rüttler und/oder einen Klopfer.

5. Verfahren nach einem der vorhergehenden Ansprüche, **dadurch gekennzeichnet, dass** der wenigstens eine Schwingungsanreger (36) von dem mobilen Arm (10) im Schwingungsmodus derart geführt wird, dass der wenigstens eine Schwingungsanreger (36) das Objekt (3) kontaktiert oder von dem Objekt (3) beabstandet ist.

6. Verfahren nach einem der vorhergehenden Ansprüche, **dadurch gekennzeichnet, dass** die Fluid-Einführungseinrichtung (38, 40) wenigstens eine Düse (40) aufweist, welche ausgebildet und eingerichtet ist, um im Einführungsmodus an der wenigstens einen Öffnung und/oder an der wenigstens einen Ausnehmung (22) und/oder an der wenigstens einen Kanalöffnung (24a) des wenigstens einen das Objekt (3) durchdringenden Kanals (24) anzusetzen oder in die wenigstens eine Öffnung und/oder in die wenigstens eine Ausnehmung (22) und/oder in die wenigstens eine Kanalöffnung (24a, 24b) des wenigstens einen das Objekt (3) durchdringenden Kanals (24) wenigstens teilweise einzutauchen, um das Fluid dort einzuführen oder einzuströmen, vorzugsweise unter Druck.

7. Verfahren nach einem der vorhergehenden Ansprüche, **dadurch gekennzeichnet, dass** im Einführungsmodus eine konstante oder pulsierende Einführung von Fluid in die wenigstens eine Öffnung und/oder in die wenigstens Ausnehmung (22) und/oder in die wenigstens eine Kanalöffnung (24a, 24b) des wenigstens einen das Objekt (3) durchdringenden Kanals (24) erfolgt.

8. Verfahren nach einem der vorhergehenden Ansprüche, **dadurch gekennzeichnet, dass** als Fluid wenigstens Folgendes verwendet wird: ein Gas, insbesondere ein inertes Schutzgas, Druckluft und/oder feste Partikel.

9. Verfahren nach einem der vorhergehenden Ansprüche, **dadurch gekennzeichnet, dass** wenigstens ein erster Sensor (42) verwendet wird, mit welchem
a) im Saugmodus erkannt werden kann, ob unverfestigt gebliebenes pulverförmiges Aufbaumaterial (20) von dem Objekt (3) und/oder aus der wenigstens einen Öffnung und/oder aus dem wenigstens einen Ausnehmung (22) und/oder aus dem wenigstens einen das Objekt (3) durchdringenden Kanal (24) entfernt wird oder entfernt worden ist, und/oder welche Menge, Masse und/oder Volumen an unverfestigt gebliebenem pulverförmigen Aufbaumaterial (20) von dem Objekt (3) und/oder aus der wenigstens einen Öffnung und/oder aus der wenigstens einen Ausnehmung (22) und/oder aus dem wenigstens einen das Objekt (3) durchdringenden Kanal (24) entfernt wird oder entfernt worden ist, und/oder
b) im Fluid-Einführungsmodus anhand des Strömungswiderstands des in die wenigstens eine Öffnung, Ausnehmung (22) und/oder in den wenigstens einen das Objekt (3) durchdringenden Kanal (24) eingeströmten Fluids erkannt werden kann, ob unverfestigt gebliebenes pulverförmiges Aufbaumaterial (20) aus der wenigstens einen Öffnung, Ausnehmung (22) und/oder aus dem wenigstens einen Kanal (24) entfernt wird oder entfernt worden ist, und/oder welche Menge, Masse und/oder Volumen an unverfestigt gebliebenem pulverförmigen Aufbaumaterial (20) entfernt wird oder entfernt worden ist.

10. Verfahren nach einem der vorhergehenden Ansprüche, **dadurch gekennzeichnet, dass**
a) wenigstens ein zweiter Sensor (44) verwendet wird, und/oder
b) gespeicherte Geometriedaten des wenigstens einen Objekts (3) verwendet werden,
um im Saugmodus und/oder im Fluid-Einführungsmodus die wenigstens eine Öffnung und/oder die wenigstens Ausnehmung (22) und/oder die wenigstens eine Kanalöffnung (24a, 24b) des wenigstens einen das Objekt (3) durchdringenden Kanals (24) zu lokalisieren.

11. Verfahren nach einem der vorhergehenden Ansprüche, **dadurch gekennzeichnet, dass** die Halte- oder Spanneinrichtung (28) um wenigstens eine Drehachse angetrieben wird und dass die Drehung der Halte- oder Spanneinrichtung um die wenigstens eine Drehachse und die Bewegung des mobilen Arms (10) der Handhabungseinrichtung (12) durch die Steuerung derart koordiniert gesteuert werden, dass der Saugmodus und/oder der Schwingungsmodus und/oder der Einführungsmodus an unterschiedlichen Positionen oder Stellen des Objekts (3) insbesondere sukzessiv ausgeführt werden kann (können).

12. Reinigungsvorrichtung (1) zum Reinigen wenigstens eines dreidimensionalen Objekts (3), welches insbesondere wenigstens eine Öffnung, wenigstens eine Ausnehmung (22) und/oder wenigstens einen das Objekt (3) durchdringenden Kanal (24) aufweist, wobei das Objekt (3) durch schichtweises Aufbringen und selektives Verfestigen eines pulverförmigen Aufbaumaterials im Laufe eines Bauprozesses hergestellt worden ist, von unverfestigt gebliebenem pulverförmigen Aufbaumaterial (20), wobei die Reinigungsvorrichtung (1) wenigstens Folgendes umfasst:
a) eine Halte- oder Spanneinrichtung (28), welche ausgebildet und eingerichtet ist, das Objekt (3) zu halten oder zu spannen, und
b) eine insbesondere händisch oder von einer Steuerung steuerbare Handhabungseinrichtung (12) mit wenigstens einem mobilen Arm (10), welcher wenigstens einen Teil von Werkzeugmitteln führt, die ausgebildet und eingerichtet sind, um das in der Halte- oder Spanneinrichtung (28) gehaltene oder gespannte Objekt (3) von dem umgebendem, unverfestigt gebliebenem pulverförmigen Aufbaumaterial (20) zu reinigen,
c) wobei der mobile Arm (10) ausgebildet und eingerichtet ist, um den wenigstens einen Teil der Werkzeugmittel in unterschiedliche Positionen in Bezug zu dem Objekt (3) zu führen und um an den Positionen jeweils wenigstens einen Reinigungsmodus auszuführen, **dadurch gekennzeichnet, dass**
d) die Werkzeugmittel wenigstens Folgendes umfassen:
d1) einen Schwingungsanreger (36), welcher eingerichtet und ausgebildet ist, um in einem Schwingungsmodus als Reinigungsmodus das Objekt (3) durch Luftschall und/oder durch Körperschall zu Schwingungen anzuregen, und/oder
d2) eine Fluid-Einführungseinrichtung (38, 40), welche eingerichtet und ausgebildet ist, um in einem Einführungsmodus als Reinigungsmodus wenigstens ein Fluid gezielt in die wenigstens eine Öffnung und/oder in die wenigstens eine Ausnehmung (22) und/oder in wenigstens eine Kanalöffnung (24a, 24b) des wenigstens einen das Objekt (3) durchdringenden Kanals (24) einzuführen oder einzuströmen, und/oder
d3) eine Saugeinrichtung, welche eingerichtet und ausgebildet ist, um in einem Saugmodus als Reinigungsmodus einen Saugstrom zu erzeugen, durch welchen unverfestigt gebliebenes pulverförmiges Aufbaumaterial (20) von dem Objekt (3) abgesaugt wird, insbesondere gezielt aus der wenigstens einen Öffnung und/oder aus der wenigstens einen Ausnehmung (22) und/oder aus der wenigstens einen Kanalöffnung (24a, 24b) des wenigstens einen das Objekt (3) durchdringenden Kanals (24).

13. Reinigungsvorrichtung nach Anspruch 12, **dadurch gekennzeichnet, dass** die Steuerung (32) ausgebildet und eingerichtet ist, wenigstens zwei Reinigungsmodi unter dem Schwingungsmodus, dem Einführungsmodus und dem Saugmodus parallel oder hintereinander auszuführen.

14. Reinigungsvorrichtung nach einem der Ansprüche 12 oder 13, **dadurch gekennzeichnet, dass** die Handhabungseinrichtung (12) ausgebildet ist, um mit Hilfe des mobilen Arms (10) wenigstens einen auswechselbaren Teil der Werkzeugmittel bedarfsweise aus einem Magazin (34) zu entnehmen, aufzunehmen und/oder in das Magazin (34) abzulegen.

15. Reinigungsvorrichtung nach einem der Ansprüche 12 bis 14, **dadurch gekennzeichnet, dass** der wenigstens eine Schwingungsanreger (36) mindestens Folgendes umfasst: einen Ultraschall-Schwingungsanreger, einen Rüttler und/oder einen Klopfer.

16. Reinigungsvorrichtung nach einem der Ansprüche 12 bis 15, **dadurch gekennzeichnet, dass** der mobile Arm (10) der Handhabungseinrichtung (12) derart steuerbar ist, dass der Schwingungsanreger (36) im Schwingungsmodus das Objekt (3) kontaktiert oder von dem Objekt (3) beabstandet ist.

17. Reinigungsvorrichtung nach einem der Ansprüche 12 bis 16, **dadurch gekennzeichnet, dass** die Fluid-Einführungseinrichtung (38, 40) wenigstens eine Düse (40) aufweist, und dass der mobile Arm (10) der Handhabungseinrichtung (12) derart steuerbar ist, dass im Einführungsmodus die Düse (40) an der wenigstens einen Öffnung und/oder an der wenigstens einen Ausnehmung (22) und/oder an der wenigstens einen Kanalöffnung (24a) des wenigstens einen das Objekt (3) durchdringenden Kanals (24) anzusetzen oder in die wenigstens eine Öffnung und/oder in die wenigstens eine Ausnehmung (22) und/oder in die wenigstens eine Kanalöffnung (24a, 24b) des wenigstens einen das Objekt (3) durchdringenden Kanals (24) wenigstens teilweise eintaucht, um das Fluid dort einzuführen.

18. Reinigungsvorrichtung nach einem der Ansprüche 12 bis 17, **dadurch gekennzeichnet, dass** die Fluid-Einführungseinrichtung ausgebildet und eingerichtet ist, um im Einführungsmodus einen konstanten oder pulsierenden Fluidstrom in die wenigstens eine Öffnung und/oder in die wenigstens eine Ausnehmung (22) und/oder in die wenigstens eine Kanalöffnung (24a, 24b) des wenigstens einen das Objekt (3) durchdringenden Kanals (24) einzuführen oder einzuströmen.

19. Reinigungsvorrichtung nach einem der Ansprüche 12 bis 18, **dadurch gekennzeichnet, dass** wenigstens ein erster Sensor (42) vorgesehen ist, welcher Sensorsignale in die Steuerung (32) einsteuert, wobei der wenigstens eine erste Sensor (42) und die Steuerung (32) ausgebildet und eingerichtet sind, dass die Steuerung (32) abhängig von den Sensorsignalen
a) im Saugmodus erkennen kann, ob unverfestigt gebliebenes pulverförmiges Aufbaumaterial (20) von dem Objekt (3) und/oder aus der wenigstens einen Öffnung und/oder aus dem wenigstens einen Ausnehmung (22) und/oder aus dem wenigstens einen das Objekt (3) durchdringenden Kanal (24) entfernt wird oder entfernt worden ist, und/oder welche Menge, Masse und/oder Volumen an unverfestigt gebliebenem pulverförmigen Aufbaumaterial (20) von dem Objekt (3) und/oder aus der wenigstens einen Öffnung und/oder aus der wenigstens einen Ausnehmung (22) und/oder aus dem wenigstens einen das Objekt (3) durchdringenden Kanal (24) entfernt wird oder entfernt worden ist, und/oder
b) im Fluid-Einführungsmodus anhand des Strömungswiderstands des eingeströmten Fluids erkennen kann, ob unverfestigt gebliebenes pulverförmiges Aufbaumaterial aus der wenigstens einen Öffnung, aus der wenigstens einen Ausnehmung (22) und/oder aus dem wenigstens einen Kanal (24) entfernt wird oder entfernt worden ist, und/oder welche Menge, Masse und/oder Volumen an unverfestigt gebliebenem pulverförmigen Aufbaumaterial (20) entfernt wird oder entfernt worden ist.

20. Reinigungsvorrichtung nach einem der Ansprüche 12 bis 19, **dadurch gekennzeichnet, dass**
a) wenigstens ein zweiter, mit der Steuerung (32) zusammenwirkender Sensor (44) vorgesehen ist, und/oder
b) die Steuerung (32) ausgebildet und eingerichtet ist, gespeicherte Geometriedaten des wenigstens einen Objekts (3) zu verwenden,
um im Saugmodus und/oder im Fluid-Einführungsmodus die wenigstens eine Öffnung und/oder die wenigstens Ausnehmung (22) und/oder die wenigstens eine Kanalöffnung (24a, 24b) des wenigstens einen das Objekt (3) durchdringenden Kanals (24) zu lokalisieren.

21. Reinigungsvorrichtung nach einem der Ansprüche 12 bis 20, **dadurch gekennzeichnet, dass** die Halte- oder Spanneinrichtung (28) um wenigstens eine Drehachse angetrieben ist und dass die Drehung der Halte- und Spanneinrichtung (28) um die wenigstens eine Drehachse und die Bewegung des mobilen Arms (10) der Handhabungseinrichtung (12) mittels der Steuerung (32) derart koordiniert gesteuert werden, um den Saugmodus und/oder den Schwingungsmodus und/oder den Einführungsmodus an unterschiedlichen Stellen des Objekts (3) insbesondere sukzessiv auszuführen.

22. Reinigungsvorrichtung nach Anspruch 19, **dadurch gekennzeichnet, dass** die Halte- oder Spanneinrichtung (28) um eine erste Drehachse und eine in Bezug auf die erste Drehachse senkrechte zweite Drehachse schwenkbar ist.

23. Reinigungsvorrichtung nach einem der Ansprüche 12 bis 22, **dadurch gekennzeichnet, dass** sie eine insbesondere pulverdichte Reinigungskammer (4) aufweist, innerhalb welcher wenigstens der mobile Arm (10) der Handhabungseinrichtung (12) angeordnet ist oder in welche der mobile Arm (10) durch eine Öffnung (8) einer Wandung der Reinigungskammer (4) hindurch hineinragen kann.

24. Reinigungsvorrichtung nach einem der Ansprüche 12 bis 23, **dadurch gekennzeichnet, dass** die Handhabungseinrichtung (12) wenigstens einen mehrachsigen Industrieroboter umfasst.
